# EUROPEAN PATENT SPECIFICATION

(11) **EP 1 784 036 B1**
(45) Date of publication and mention of the grant of the patent: **05.12.2012**
(21) Application number: 05757896.5
(22) Date of filing: 07.07.2005
(51) Int. Cl.: H04L 1/18

(54) **COMMUNICATION CONTROL METHOD, RADIO COMMUNICATION SYSTEM, BASE STATION, AND MOBILE STATION**
KOMMUNIKATIONS-STEUERVERFAHREN, FUNKKOMMUNIKATIONSSYSTEM, BASISSTATION UND MOBILSTATION
TECHNIQUE DE CONTRÔLE DES COMMUNICATIONS, SYSTÈME DE TRANSMISSION RADIO, STATION DE BASE ET STATION MOBILE

(30) Priority: 10.08.2004 JP 2004233314
(43) Date of publication of application: 09.05.2007
(73) Proprietor: NEC Corporation, Minato-ku Tokyo 108-8001 (JP)
(72) Inventor: KURODA, Nahoko, Tokyo 108-8001 (JP); LEE, Jinsock, Tokyo 108-8001 (JP)
(74) Representative: Glawe, Delfs, Moll
(86) International application number: PCT/JP2005/012563
(87) International publication number: WO 2006/016457

(56) References cited:
- WO-A1-03/096598
- JP-A- 2004 007 030
- JP-A- 2004 064 691
- US-A1- 2002 060 997
- US-A1- 2004 013 087
- US-B1- 6 330 435
- GHOSH A ET AL: "Overview of enhanced uplink for 3GPP W-CDMA", VEHICULAR TECHNOLOGY CONFERENCE, 2004. VTC 2004-SPRING. 2004 IEEE 59TH MILAN, ITALY 17-19 MAY 2004, PISCATAWAY, NJ, USA,IEEE, US, vol. 4, 17 May 2004 (2004-05-17), pages 2261-2265, XP010766561, DOI: DOI:10.1109/VETECS.2004.1390677 ISBN: 978-0-7803-8255-8

## Description

### Technical Field:

The present invention relates to a base station, mobile station, and control signal transmission method in a radio communication system such as a cellular system, and more particularly to the retransmission control of packet transmission on an uplink, i.e., a circuit from a mobile station to a base station.

### Background Art:

Various types of communication systems are typically provided with an ARQ (Automatic Repeat reQuest) function to eliminate the influence of errors that occur in transmission. Automatic repeat request is one of data transmission methods widely used in cable communication systems and radio communication systems wherein data that have been transmitted by the transmitting side are subjected to error detection on the receiving side, and when correct reception is possible, the receiving side reports to the transmitting side ACK (acknowledgement) as a delivery confirmation signal which indicates that correct reception was possible. When the receiving side is not able to correctly receive data, the receiving side reports to the transmitting side NACK (Non-Acknowledgement) as the delivery confirmation signal which indicates error reception, i.e., that the data could not be received correctly. Upon receiving NACK, the transmitting side resends the same data at a prescribed timing. The receiving side subjects the retransmission data to the same error detection and reports ACK or NACK to the transmitting side. In ARQ, the receiving side repeatedly carries out retransmission requests as described above until the data are received correctly or until predetermined conditions are attained. As the predetermined conditions, for example, the maximum number of retransmissions or the maximum retransmission time period may be used. This method is capable of lowering the loss rate of data packets that occurs due to various causes on the communication path such as the collision of packets or due to the increase in propagation loss on the radio transmission path.

In a radio communication system such as a cellular system, on the other hand, base stations (BTS) are arranged in prescribed service areas, and each base station sets radio channels with the plurality of mobile stations (MS) in the cell that pertains to that base station. In addition, a Radio Network Controller (RNC) is generally provided that is connected to a plurality of base stations and that controls base stations and each mobile station that is under the jurisdiction of the base stations. To enable effective use of radio resources, in some of these radio communication systems, base stations in which circuits are set with a plurality of mobile stations perform scheduling of the uplink data transmission of the mobile stations.

As one example of a radio communication system that is provided with ARQ and in which base stations carry out scheduling for the uplink data transmission of mobile stations, Enhanced Uplink DCH (Dedicated Channel), i.e., EUDCH, is being investigated in a WCDMA (Wideband Code Division Multiple Access) system. EUDCH is described in the reference document 3GPP TR25.896 v6.0.0 (2004-03) 3^{rd} Generation Partnership Project; Technical Specification Group Radio Access Network; Feasibility Study for Enhanced Uplink for UTRA FDD (Release 6). The following explanation relates to EUDCH.

In radio communication, control is typically implemented to keep the power of the desired wave with respect to the power of noise or interference at the receiving unit at at least a prescribed quality threshold value such that the desired signal can be correctly received. In WCDMA, noise rise in the base station is used as one index indicating reception quality. Noise rise is the ratio of the total reception power and the noise power. A base station measures noise rise at prescribed timings and reports the measured noise rise to the radio network controller (RNC). The RNC implements control such that radio communication at each mobile station is carried out normally by limiting the addition of new calls or limiting the transport format combination (TFC), which is the combination of transmission formats that mobile stations are permitted to use, such that the noise rise does not exceed a prescribed quality threshold value. TFC is the combination of parameters for prescribing the transmission interval of each physical channel or the amount of information bits within the transmission intervals, and the selection of TFC also determines the transmission rate on the uplink. The RNC reports to each of the mobile stations a plurality of TFC as TFC sets (TFCS). The mobile stations select the TFC that are to be used in transmission from among the TFC that are included in the TFCS depending on the amount of data in the buffer or the power conditions at the time of transmission. The use of TFC for high transmission rate typically causes an increase in the required power, and as a result, causes an increase in the noise rise of the base station. Accordingly, when the noise rise at a base station is higher than a prescribed quality threshold value, the noise rise can be reduced by prohibiting the mobile station from using TFC for a high transmission rate.

However, because the RNC manages a plurality of base stations, the RNC bears a high control load, and the control delay in the RNC is therefore greater than the control delay in the base station. Fluctuation in noise rise changes in bursts with occurrences such as change of transmission rate of the uplink and transmission starts and stops. It is extremely difficult for the RNC to control the TFC of each mobile station at high speed according to these burst-like changes in the fluctuation of noise rise. Thus, in order to always keep noise rise below a prescribed quality threshold value, a target value must be set such that the average value of the noise rise is sufficiently smaller than the prescribed quality threshold value, and a large noise margin must be provided for sudden increases in the noise rise. However, as the noise rise margin increases, the efficiency of utilization of the uplink resources decreases and the uplink capacity falls.

In EUDCH, however, a base station controls the TFCS of each mobile station. In other words, a base station controls the maximum TFC or the maximum transmission rate that mobile stations are permitted to use according to the noise rise fluctuation. The maximum TFC is the TFC at which the required power reaches a maximum. By means of this control, each mobile station is able to respond at high speed to noise rise fluctuations, whereby the target average value of noise rise can be set higher and the uplink capacity is improved.

The base station further performs scheduling to effectively use limited uplink capacity and fairly assign resources to a plurality of mobile stations. In EUDCH, scheduling that is being investigated can be broadly divided between two types, one type of scheduling being transmission rate scheduling in which the maximum transmission rate or maximum TFC that is permitted for transmission is designated to mobile stations, and the other type being time/transmission rate scheduling in which transmission time, which is permitted for transmission, and maximum transmission rate or maximum TFC are designated to mobile stations.

HARQ (Hybrid Automatic Repeat reQuest), which is one type of ARQ, is adopted in EUDCH. Therefore, a base station transmits ACK or NACK according to the reception results of a data block, and the mobile station cancels the corresponding data blocks upon receiving ACK, and holds the corresponding data block and retransmits at the prescribed timing upon receiving NACK. The base station combines the data blocks that are in the process of being received and data blocks that have been retransmitted, and decodes them. By combining data blocks in this way, the energy per bit can be increased and the probability that decoding can be realized correctly can be improved. Compared to a case in which retransmission is requested in the RNC, the use of the above-described HARQ in a base station can realize retransmission at a higher rate, can further decrease the packet transmission delay, and can improve throughput.

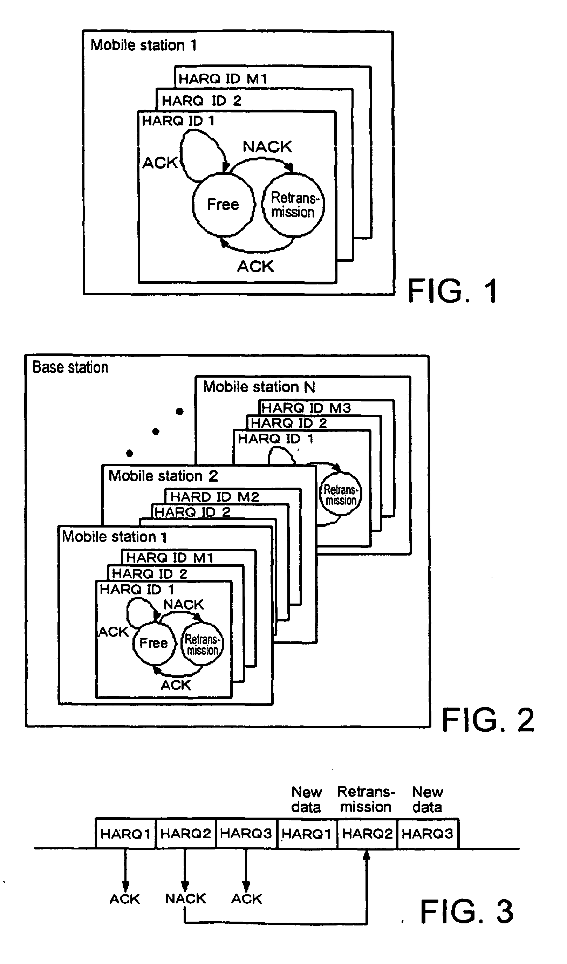

FIG. 1 and FIG. 2 show a HARQ process, i.e., a transmission process, in a mobile station and base station, respectively. A HARQ process is one HARQ control unit, the base station returning one ACK or NACK for one HARQ process. Mobile stations 1 to N are assumed to exist corresponding to the base station. As shown in FIG. 1, each mobile station can have a plurality of HARQ processes, and these HARQ processes are distinguished by a HARQ ID that is uniquely assigned to each HARQ process. As shown in FIG. 2, the base station holds the one or the plurality of HARQ processes for each mobile station.

A HARQ process has two states, a free state and a retransmission state. The initial state of a HARQ process is the free state, and when data are transmitted, the retransmission state is entered when NACK is transmitted in the case of a base station and when NACK is received in the case of a mobile station. A retransmission state HARQ process is simply a retransmission state from retransmitting the data and until transmitting ACK in the case of a base station and until receiving ACK in the case of a mobile station, and a HARQ process in the retransmission state cannot be used in the transmission of new data.

Communication methods that use a plurality of HARQ processes further include synchronous transmission and asynchronous transmission.

In synchronous transmission, the timing of retransmission is fixed in advance for each HARQ process. FIG. 3 shows the relation between ACK and NACK and the disposition in time of each HARQ process in synchronous transmission. As shown in the figure, the timing of each HARQ process is fixed in the order of HARQ 1 → HARQ 2 → HARQ 3 → HARQ 1 → ... The feature of this method is that, because the timing of transmission of each HARQ process is known at the base station and mobile station, there is no need to clearly indicate HARQ process numbers when transmitting each data block. As a result, the overhead of control signals can be reduced. However, the constraint on the degree of freedom of the transmission timing prevents control of the frequency of transmission or control of transmission timing that depends on priority.

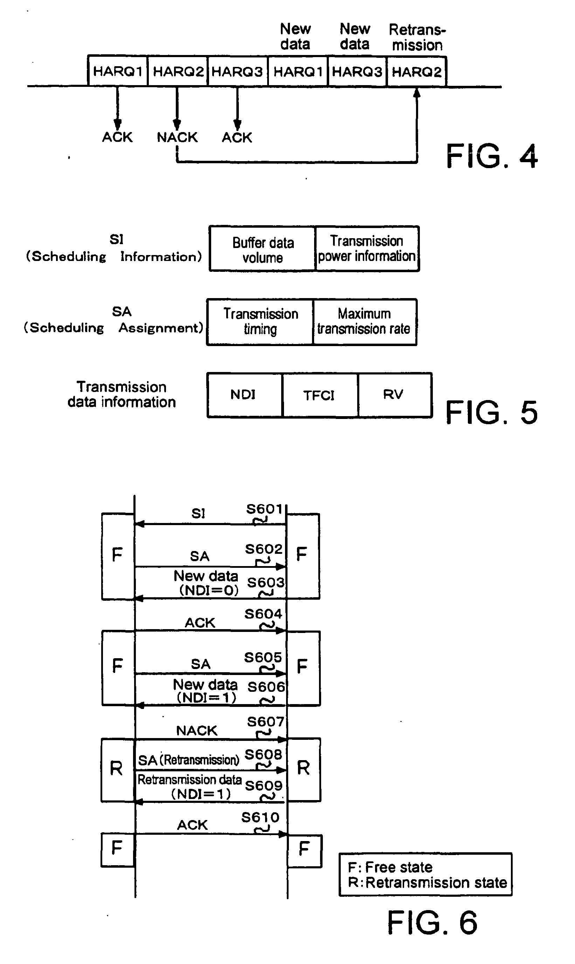

On the other hand, in asynchronous transmission, the transmission timing of HARQ processes is not fixed. FIG. 4 shows the relation between ACK and NACK and the disposition in time of each HARQ process in asynchronous transmission. In the case of asynchronous transmission, although there is an increase in overhead for the portion of control signals for indicating HARQ process numbers when transmitting data blocks, transmission frequency or transmission timing can be controlled according to priority.

In addition, the adoption of soft hand-over (SHO) in EUDCH is being investigated. In soft hand-over, when the difference between the electric field strength of electromagnetic waves from neighboring cells of a mobile station that is at, for example, a cell boundary and the field strength of electromagnetic waves from the cell engaged in communication is within a prescribed threshold value, circuits are simultaneously set between the mobile station and both cells and the received signals are combined in the mobile station or the RNC, whereby the reception quality is improved. The mobile station at this time communicates with a plurality of base stations (hereinbelow referred to as "SHO base stations"). In EUDCH, HARQ is carried out at each base station as described above, but each SHO base station transmits a delivery confirmation signal at the time of SHO, and the mobile station receives the plurality of delivery confirmation signals. Therefore, the mobile station combines the plurality of received delivery confirmations in accordance with prescribed rules and carries out the discarding or resending of the relevant data blocks in accordance with the combination results. One concrete example of the rules is a method in which, when even one ACK has been received, this data block is considered to have been correctly received and thus discarded. In this case, if even one station among the SHO base stations is able to correctly receive, the transmission of the data blocks is completed, and the packet transmission delay on a physical channel can be minimized. However, when the mobile station has received even only one ACK, the data blocks are considered to have been correctly received and the data are discarded, and as a result, such a configuration is prone to errors in delivery confirmation signal (ACK or NACK) and raises the probability for the necessity of retransmissions on a higher-level layer.

Explanation next regards the details of the system configuration when using time/transmission rate scheduling. In this case, synchronous transmission is employed in HARQ and base stations are assumed to issue instructions relating to retransmissions. In other words, it is assumed that a base station-controlled retransmission method is used.

FIG. 5 shows the signals which are exchanged between base stations and mobile stations.

SI (Scheduling Information) is a signal transmitted on an uplink and includes the volume of data in the buffer of a mobile station and transmission power information. The buffer data volume is the amount of data that are stored in the buffer of the mobile station and that are to be transmitted by EUDCH. In the case of a mobile station having a plurality of buffers, the total data volume of all buffers may be reported as the buffer data volume, or the data volume of each buffer may be reported as the buffer data volume. The transmission power information is information relating to the transmission power state and serves as an index of the transmission power that the mobile station can currently use in EUDCH. The power value that can be used in EUDCH can be reported as the transmission power information, or the power that is currently being used can be reported as the transmission power information.

SA (Scheduling Assignment) is a signal that includes the transmission timing and information relating to the maximum transmission rate and that is transmitted on the downlink. The transmission timing indicates the time intervals in which a mobile station is permitted to transmit. As the transmission timing, the frame number in which transmission may begin and the number of frames in which transmission may continue are reported. In this case, the synchronous transmission method is assumed for HARQ, and the frame number and HARQ ID are therefore linked. Accordingly, the HARQ ID may be designated in place of reporting the frame number of the start of transmission. The maximum transmission rate is an index of the maximum transmission rate that is permitted for use within the transmission time interval assigned to a mobile station. For example, the maximum TFC included in the TFCS that the radio network controller (RNC) reports to the mobile stations and base stations in advance or maximum transmission rate and maximum power are reported as the maximum transmission rate.

The transmission data information is an uplink signal that includes, for example, an NDI (New Data Indicator), TFCI (Transport Format Combination Indicator), and RV (Redundancy Version), and is transmitted annexed to data brocks. The NDI is 3-bit information for instructing the mobile station to transmit new data by the relevant HARQ process, and is a value from "0" to "7" indicated by a decimal value. When a mobile station begins transmission of new data, the mobile station increases the NDI by "1" from when transmitting by the relevant HARQ process of the previous transmission and then transmits. When retransmitting, the mobile station transmits the same NDI value as in the initial transmission of the data block. The TFCI is an indicator indicating the TFC that is used in transmission, and the RV is information relating to parity bit pattern.

FIG. 6 is a sequence chart showing the exchange of signals between a base station and mobile station. In addition, F and R in FIG. 6 indicate the states of the HARQ processes used in the transmission and reception of these data; F indicating the free state and R indicating the retransmission state. The initial HARQ process state is the free state in both the base station and the mobile station.

The mobile station transmits SI on the E-DPCCH (Enhanced Dedicated Physical Control Channel) in Step S601, and thus communicates to the base station information relating to the volume of data in buffers and the transmission power state. In this case, SI is assumed to be transmitted when new data have arrived in the mobile station buffer. The base station carries out scheduling based on the communicated SI information and uses E-DPCCH(DL) to transmit SA to each mobile station in Step S602. The suffix "DL" indicates a downlink. Upon receiving the SA, the mobile station transmits the data at a transmission rate that is no greater than the indicated maximum transmission rate within the indicated transmission time interval in Step S603. At this time, the mobile station transmits transmission data information together with the data by means of E-DPCCH. At this time, transmission is carried out with the NDI set to "0." Upon receiving the data, the base station carries out a reception process and decoding, and then carries out a determination of reception errors based on the CRC (Cyclic Redundancy Check) bits. During this time, both the mobile station and base station are carrying out processing in the relevant HARQ processes, and as a result, these HARQ processes cannot be used, and the HARQ process state are therefore not in the free state or in the retransmission state. If the result of the error determination indicates that the data have been correctly received, the base station transmits ACK to the mobile station at the prescribed ACK/NACK transmission timing in Step S604.

The transmission and reception of one data block is completed normally by the foregoing procedure and the HARQ process returns to the free state, whereby the base station transmits SA to the mobile station in Step S605 and instructs that the next data be transmitted. In response, the mobile station transmits new data in Step S606, but regarding the control signals that are transmitted together with this data block, the NDI is increased by "1" to NDI=1 to indicate that this data block is new data and then transmitted. The base station transmits the data block and control signals at the instructed transmission timing, recognizes that the NDI included in the control signal has been increased by "1" over the previous transmission, and thus begins the reception process as a process for new data. If it is determined as a result of the error determination that this data block could not be received correctly, the base station not only transmits NACK at the prescribed timing in Step S607, but also sets the relevant HARQ process to the retransmission state and considers this a state that does not allow its use in new data transmission. The NACK is received at the mobile station, which similarly considers the relevant HARQ process as the retransmission state. The base station subsequently transmits SA in Step S608 to instruct retransmission of this data block. In Step S609, the mobile station transmits the same data block as in the initial transmission at the instructed transmission timing. Regarding the NDI at this time, the mobile station sets NDI=1, which is the same as at the time of the initial transmission, and transmits. The base station combines the retransmission data with the data that are being received, and having determined as the result of error determination that the data were received correctly, transmits ACK at the prescribed timing in Step S610.

Data transmission proceeds as described in the foregoing explanation when the base station and the mobile station are in a one-to-one correspondence.

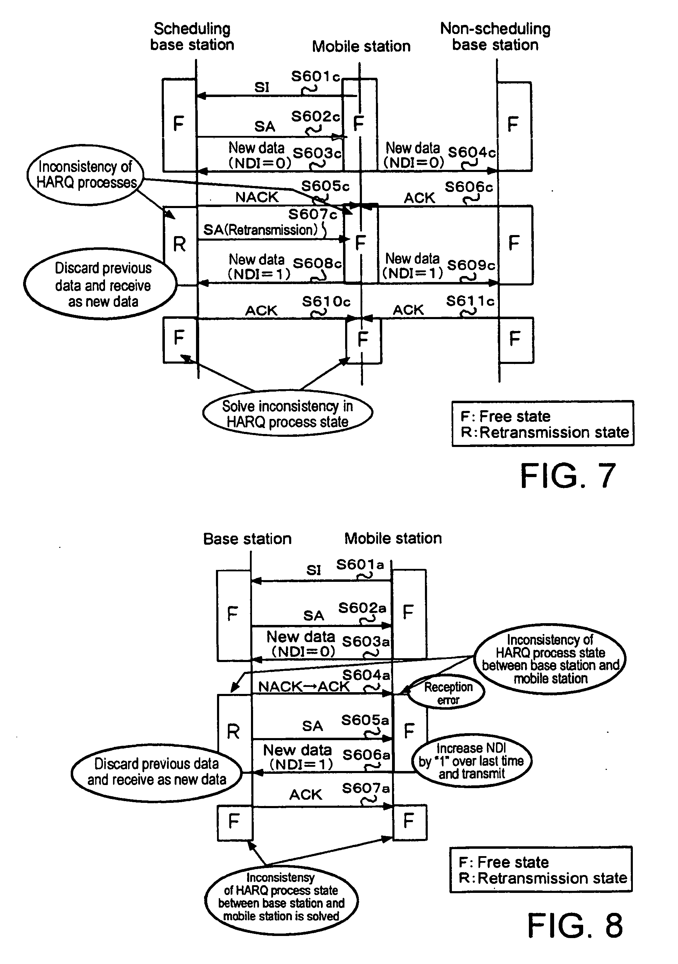

In contrast, FIG. 7 shows the progression of the exchange of signals between base stations and a mobile station during SHO.

During SHO, scheduling is carried out at only one base station, and the other base station only accepts data. Accordingly, the mobile station transmits SI to the scheduling base station in Step S601 c, and only the scheduling base station transmits SA to the mobile station in Step S602c. The mobile station uses the time and transmission rate designated in the SA to transmit new data to each base station in Steps S603c and S604c. At this time, the mobile station sets the NDI to NDI=0 and transmits. Each base station processes the received data blocks and transmits either ACK or NACK at the prescribed transmission timing. At this time, the scheduling base station transmits NACK in Step 605c, and the non-scheduling base station transmits ACK in Step S606c. As a result, the retransmission state is realized in the scheduling base station, but the non-scheduling base station and mobile station return to the free state. Therefore, an inconsistency occurs in the HARQ process states. In this case, the scheduling base station transmits to mobile station an SA for assigning resources for retransmission in Step S607c. However, because there are no data that should be retransmitted in the mobile station, the mobile station instead transmits new data to each base station in Steps S608c and S609c. At this time, the mobile station increases the NDI by one to NDI=1 and transmits. The scheduling base station therefore recognizes that this data block is new, discards the data of the previous transmission, and carries out the reception process for new data. Each base station then reports to the mobile station the results of error determination in Steps S610c and S611c. In this case, both error determination results are ACK, and all HARQ process states therefore return to the free state.

As described in the foregoing explanation, during SHO, inconsistencies sometimes occur in the HARQ process states between base stations and the mobile station. However, the use of NDI can solve inconsistencies.

In radio communication, control signals may be incorrectly received due to variations in the propagation path. The following explanation regards the transmission procedure between base stations and mobile stations when ACK or NACK experiences a reception error.

In the case shown in FIG. 8, as with the case shown in FIG. 6 between a base station and a mobile station, SI, SA, and new data are transmitted as shown in Steps S601 a, S602a, and S603a. Then, in Step S604a, the base station transmits NACK, but it will here be assumed that the mobile station determines this to be ACK. In this case, the mobile station determines that this data block was received correctly, discards the relevant data, and sets the relevant HARQ process to the free state. Therefore, an inconsistency occurs between the base station and the mobile station regarding the recognition of the HARQ process state. The base station transmits an SA again in Step S605a to cause the mobile station to retransmit and instructs transmission by the relevant HARQ process. At the mobile station, however, the HARQ process is in the free state and the mobile station therefore transmits new data in Step S606a. At this time, the mobile station increases the NDI by "1" over the previous transmission and transmits, whereby the base station recognizes this transmission as new data, discards the previous data block that is still being received and carries out the reception process as for new data. In this way, when there are data that are to be sent next, the NDI communicates the fact that these are new data and thus solves the inconsistency in the HARQ process states.

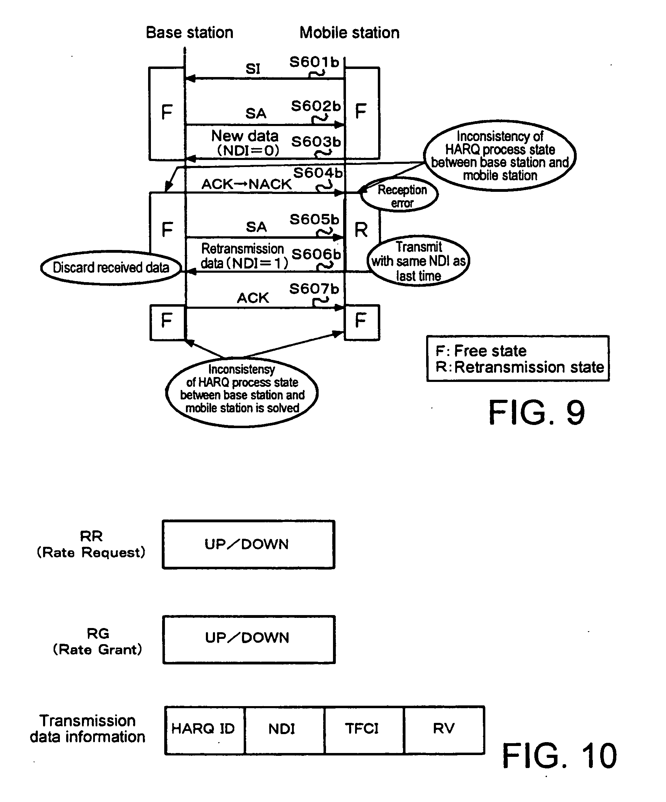

Alternatively, as shown in Steps S601 b, S602b, and S603b in the case shown in FIG. 9, SI, SA, and new data are transmitted between a base station and a mobile station as in the case shown in FIG. 6. Then, in Step S604b, the base station transmits ACK, but the mobile station here determines this to be NACK. In this case, the mobile station recognizes a retransmission state and holds the data, but the base station, being in the free state, does not assign retransmission resources. When the base station assigns resources for the transmission of new data in Step S605b, the mobile station resends the previous data block in Step S606b. In this case, however, the mobile station transmits the same NDI as in the previous transmission, and the base station therefore recognizes that the data block that is transmitted is the data block of the previous transmission and therefore not only discards the data block, but also, transmits ACK in Step S607b. The HARQ state of the mobile station can thus be corrected to the free state, and the inconsistency in HARQ process states can be resolved.

Explanation next regards the details of the system configuration when using time scheduling. In this case, it is assumed that HARQ employs asynchronous transmission and that the mobile stations make determinations regarding retransmissions. In other words, it is assumed that a spontaneous retransmission method is used.

FIG. 10 shows signals exchanged by base stations and mobile stations when time scheduling is used.

RR (Rate Request) is a signal transmitted on an uplink for requesting an increase (UP) or a decrease (DOWN) of the maximum transmission rate. Mobile stations compare the buffer volume and the current maximum transmission rate and determine RR based on prescribed conditions. In this case, using the buffer volume (BV), the current maximum transmission rate (R), and the target delay (D):
maximum transmission rate increase request "A" is sent when BV/R>(D+ ΔD); and
maximum transmission rate decrease request "B" is sent when BV/R<(D-Δ D);
and in other cases, a transmission rate request is not sent. Here, Δ D is a constant that is determined according to, for example, the service characteristics of the data that are being transmitted.

RG (Rate Grant) is a signal that is transmitted on the downlink instructing an increase (UP) or decrease (DOWN) of the current maximum transmission rate.

The transmission data information includes HARQ ID in addition to the above-described NDI (New Data Indicator), TFCI (Transport Format Combination Indicator), and RV (Redundancy Version). The HARQ ID is included for determining the HARQ process which mobile stations transmit without relation to frame numbers, the asynchronous transmission method being used in this case.

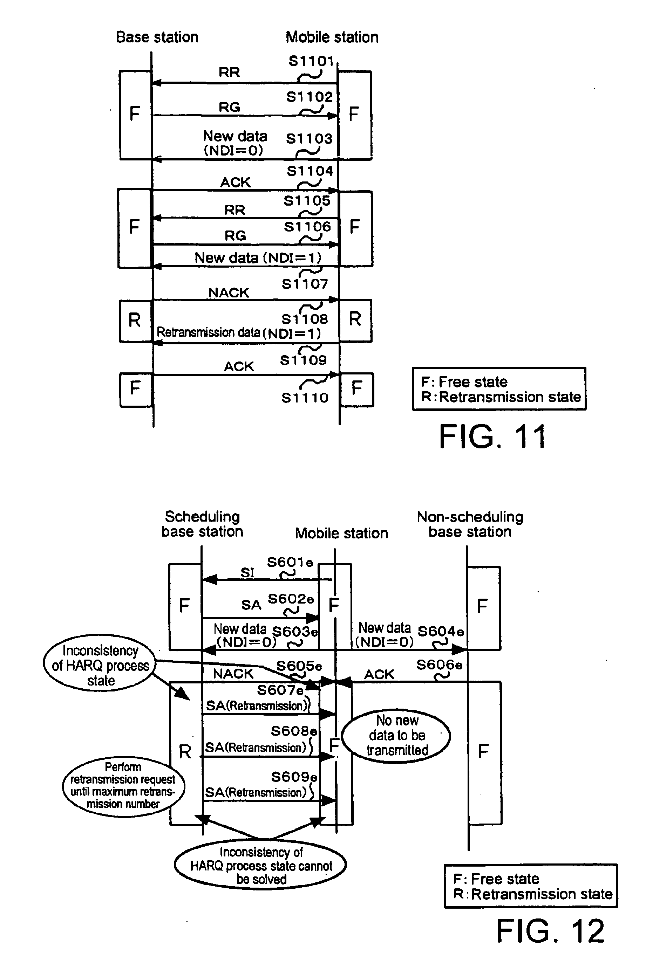

FIG. 11 is a sequence chart showing the exchange of signals between a base station and a mobile station when using time scheduling.

The mobile station measures the data volume in the buffer at a prescribed timing, and uses E-DPCCH in Step S1101 to transmit RR to the base station. The base station carries out scheduling based on the reported RR and uses E-DPCCH(DL) to transmit RG to each mobile station in Step S1102. The mobile station transmits data at a transmission rate no greater than the maximum transmission rate at any timing in Step S1103. At this time, the mobile station transmits both data blocks and transmission data information in which NDI is set to NDI=0.

Upon receiving the data, the base station carries out the reception process and decoding and determines the presence or absence of reception errors based on the CRC. In this case, correct reception was possible, and the base station transmits ACK to the mobile station at the prescribed transmission timing in Step S1104. The HARQ process therefore returns to the free state for both the base station and mobile station, and the mobile station uses this HARQ process to transmit new data at any timing in Step S1107. When errors are detected in this data block as the result of the reception error determination in the base station, the base station transmits NACK at the prescribed transmission timing in Step S1108. The mobile station accordingly retransmits the same data block as the previous transmission at any timing in Step S1109. At this time, the mobile station transmits with the NDI set to the same value as in the previous transmission. Upon achieving correct reception, the base station transmits ACK to the mobile station in Step S1110, and the base station and mobile station both return to the free state of this HARQ process.

In time scheduling, as in the case of time/transmission rate scheduling, inconsistencies may occur in the HARQ process states of the base station and mobile station during SHO or due to reception errors of ACK/NACK. However, such inconsistencies in the HARQ process states can be resolved by communicating by NDI whether the transmitted data are new data or not.
[Non-Patent Document 1]: 3GPP TR25.896 v6.0.0 (2004-03) 3^{rd} Generation Partnership Project; Technical Specification Group Radio Access Network; Feasibility Study for Enhanced Uplink for UTRA FDD (Release 6).

### Disclosure of the Invention

### Problem to Be Solved by the Invention :

When a base station carries out scheduling of an uplink such as EUDCH, scheduling is carried out by the receiving side that cannot detect the volume of generated data, i.e., a base station, and the system operations are therefore fundamentally different from a case in which scheduling is carried out by a transmitting side that can detect the volume of generated data that are to be transmitted. In EUDCH, for example, the base station must estimate the data volume in the mobile station based on the communication of transmission rate increase/decrease requests or buffer information from the mobile station and then assign resources. HARQ is adopted in EUDCH, but in HARQ, data that have not been correctly received are held in a buffer as retransmission data, and as a result, appropriate scheduling cannot be carried out when inconsistencies occur between the recognized HARQ process states in the base station and the mobile station. In such cases, a situation occurs in which resources cannot be assigned to the mobile station that requires resources even though resources exist that are not being used, and throughput therefore deteriorates.

As described in the foregoing explanation, in EUDCH, NDI can be used to resolve inconsistencies in the HARQ process states, but despite this provision, situations may occur in which inconsistencies in HARQ process states cannot be resolved.

The SHO state shown in FIG. 12 is offered as one example of a situation in which an inconsistency in the HART process states cannot be resolved.

In FIG. 12, as in the case shown in FIG. 7, a mobile station transmits SI to a scheduling base station in Step S601e, only the scheduling base station transmits SA to the mobile station in Step S602e, and the mobile station uses the time and transmission rate designated in the SA to transmit new data to each base station in Steps S603e and S604e. The scheduling base station then transmits NACK in Step S605e for the data block that the mobile station has first transmitted while the non-scheduling base station transmits ACK in Step S606e for this data block. In this case, it will be assumed that the mobile station does not hold a new data block that is to be transmitted. Thus, although the scheduling base station transmits an SA instructing retransmission in Step S607e, the mobile station is unable to transmit the NDI that is to be transmitted together with the data block. As a result, the scheduling base station is unable to receive the data block at the transmission time for which retransmission was indicated by the SA, and is unable to recognize that the mobile station has returned to the free state. The scheduling base station therefore again transmits an SA requesting retransmission to the mobile station in Step S608e and S609e. The mobile station is unable to transmit anything as previously described, and the inconsistency in HARQ processes therefore cannot be resolved.

This state continues until the scheduling base station completes the transmission of the SA up to a predetermined maximum number of retransmissions. The maximum number of retransmissions is typically set to a value that is sufficiently larger than the average number of retransmissions. This is because if reception cannot be achieved within the maximum number of retransmissions, the base station abandons the retransmission and the data block is lost, or the retransmission is needed by a higher-level layer protocol. Setting the maximum number of retransmissions close to the average number of retransmissions brings about an increase in the loss rate of data blocks or a large delay due to retransmissions on the higher-level layer and is therefore not desirable. Therefore, the maximum number of retransmissions must be made sufficiently high, and is set to, for example, a level of several tens of frames. Thus, when the above-described inconsistency in HARQ process states occurs, the scheduling base station continues to transmit pointless retransmission requests a great number of times. In this state, resources are maintained for the mobile station that no longer holds the data to be transmitted and resources therefore cannot be assigned to mobile stations that hold data to be transmitted, whereby the efficiency of utilization of the radio resources drops and the system throughput deteriorates.

Considering that the proportion of the SHO state in a WCDMA cellular system is believed to typically range over 40 to 60%, the probability of the occurrence of such a state is not small. For example, if the probability that a scheduling base station transmits NACK and a non-scheduling base station transmits ACK is assumed to be approximately 50%, this type of case will occur at an overall proportion 20 to 30%. In actuality, the probability that a scheduling base station will send NACK and a non-scheduling base station will send ACK is determined by the balance in propagation loss of each base station to the mobile station, but when switching of the scheduling base station cannot rapidly follow changes in propagation loss, the propagation loss with the non-scheduling base station becomes far smaller than the propagation loss with the scheduling base station, and a state will occur in which nearly all data blocks are received only at the non-scheduling base station. In such a case, inconsistencies in the HARQ process occur chronically, and the scheduling characteristic deteriorates drastically.

Further, in the case of a service that transmits comparatively small packets such as in streaming at prescribed time intervals, a time interval of several tens of frames in which radio resources are wasted always follows the transmission of each packet, whereby the rate of deterioration of the efficiency utilization of radio resources is extremely high. In a worst case, the possibility arises that radio resources will be continuously assigned even when data can only be transmitted intermittently, whereby the benefits of packet exchange are lost. This is a major problem from the standpoint of system throughput.

Situations in which inconsistencies in the HARQ process cannot be resolved can also occur in the event of errors in ACK or NACK.

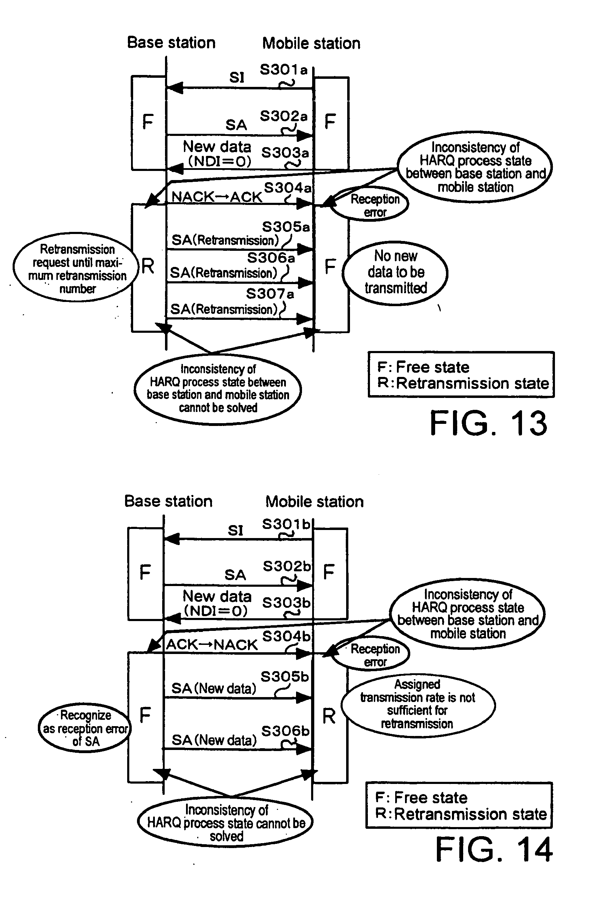

As shown in FIG. 13, a case is considered in a system that uses time/transmission rate scheduling in which, even though a base station has transmitted NACK, the mobile station receives ACK due to a reception error. The mobile station transmits SI to the base station in Step S301a, the base station transmits an SA in Step S302a, and the mobile station transmits data in Step S303a in accordance with the SA. Here, correct reception was not possible in the base station, and the base station transmits NACK in Step S304a, but due to a reception error by the mobile station, the signal is received as ACK in the mobile station. The mobile station, having received ACK, discards the data block and this HARQ process enters the free state. At the base station, however, this HARQ process remains in the retransmission state, and the scheduler assigns resources for retransmission in this HARQ process in Step S305a. At this time, when the new data to be transmitted are not present in the mobile station, the mobile station does not transmit anything and NDI is therefore not transmitted, whereby the HARQ process state in the base station remains in the retransmission state and the scheduler repeatedly assigns resources for retransmission until the maximum number of retransmissions is reached, as shown in Steps S306a and S307a. As a result, the efficiency of utilization of resources deteriorates similar to the case of SHO.

A case is next considered in which, due to a reception error, the mobile station receives NACK even though the base station has transmitted ACK, as shown in FIG. 14. The mobile station transmits SI to the base station in Step S301b, the base station transmits an SA in Step S302b, and the mobile station, in response to this SA, transmits data in Step S303b. Because correct reception has been realized in the base station, the base station transmits ACK in Step S304b, but due to a reception error by the mobile station, the mobile station takes this as NACK. The mobile station, having received NACK, holds the data block and sets this HARQ process to the retransmission state. However, the HARQ process is the free state in the base station, and the base station transmits an SA instructing the transmission of new data in Step S305b. However, if the maximum transmission rate assigned in this SA is less than the maximum transmission rate of the previous transmission, transmission of the retransmission data cannot be realized at the mobile station. The mobile station therefore transmits nothing and the base station is unable to receive anything at the designated transmission timing. At this time, several base station processes can be considered:
(a) The base station determines that the mobile station has transmitted data but that the base station has experienced a reception error, and the HARQ process at the base station is therefore set to the retransmission state;
(b) The base station determines that the mobile station has not received the SA correctly and the HARQ process at the mobile station is set to the free state; and
(c) The base station determines that the mobile station has received the SA but has not implemented transmission due to some reason such as insufficient transmission power of the mobile station and the HARQ process at the mobile station is therefore set to the free state.

The determination of whether the mobile station has transmitted a data block or not may be realized by the detection of TFCI. In other words, the base station determines (a) when the base station detects TFCI but has been unable to receive data; and determines (b) or (c) when unable to detect TFCI. In the example described here, the mobile station does not transmit anything, and the base station is therefore unable to detect TFCI and therefore determines (b) or (c) and sets this HARQ process to the free state. As a result, the base station may again transmit an SA and request new data, or may give priority to assigning resources to another mobile station. For example, in spite of again instructing transmission of new data by an SA as shown in Step S306b, the base station does not recognize that the mobile station still holds retransmission data and therefore sets the maximum transmission rate as appropriate for the conditions at that time. As a result, the possibility exists that, without any confirmation that the transmission rate required for retransmission data has been assigned, transmission will not be possible despite the assignment of radio resources. The efficiency of utilization of radio resources therefore drops, and further, because transmission cannot be realized even though the mobile station holds the data to be transmitted, transmission delay increases drastically. The problem therefore arises that both the system throughput and user throughput are degraded.

In addition, it is not possible to distinguish at the base station between the above-described (b) and (c). In the case of (b), the base station should raise the transmission power of SA and again assign the same resources, but in the case of (c), the data cannot be transmitted even if the same resources are assigned and the resources are therefore wasted. The inability to distinguish between these cases at the base station is undesirable because inappropriate processes will be carried out and the efficiency of utilization of resources will be further degraded.

It is an object of the present invention to provide a communication control method, a radio communication system, a base station, and a mobile station that can improve both system throughput and user throughput by solving the problem wherein, due to inconsistencies of HARQ process states such as described in the forgoing explanation, resources are pointlessly assigned to a mobile station that does not hold data to be transmitted, thus preventing assignment of radio resources to mobile stations that hold data.

The problem is solved using the features of the claims.

Document US2004/0013087 A1 discloses a method and a device for preventing a protocol stalling wherein a base station notifies a mobile station of a transmission resource assignment information indicating transmission resources.

The application of the present invention enables a decrease of the transmission delay of data packets and an improvement of the system throughput and user throughput in a system in which the receiving side, i.e., the base station, carries out scheduling, and moreover, that uses automatic retransmission request such as HARQ.

When the receiving side carries out scheduling, the scheduler cannot directly detect the data volume in the buffer of the transmitting side, i.e., the mobile station, and must therefore determine the assignment of resources while estimating the data volume in the buffer by means of control signals from the transmitting side. In addition, when HARQ is used, data that have not been correctly received are held as retransmission data, and as a result, appropriate scheduling cannot be carried out when inconsistencies of HARQ process states occur between the base station and mobile station due to, for example, control signal errors. In such cases, a state occurs in which unused resources cannot be assigned to mobile stations that require resources despite the existence of resources that are not being used, and system throughput deteriorates. According to the present invention, these inconsistencies in the HARQ process states can be resolved, whereby cases can be avoided in which the base station continues to recognize a retransmission state and therefore assigns resources for retransmission to a mobile station even when data to be transmitted is not present in the mobile station. In addition, situations can be avoided in which, although the base station is in the free state, the mobile station recognizes a retransmission state, and as a result, the assigned resources are inadequate for retransmission and the transmission of data blocks cannot be carried out. As a result, the present invention both improves user throughput and increases the efficiency of utilization of resources, and thus improves system throughput.

In addition, according to the present invention, a base station is able to detect that a mobile station has incorrectly received a resource assignment signal (SA) and can therefore implement control such that the transmission power of the resource assignment signal becomes an appropriate value. The present invention therefore enables a decrease in the error rate of resource assignment signals and an increase in the probability that resources assigned by the base station will be used properly. In other words, the present invention increases the efficiency of utilization of resources, increases both the system throughput and user throughput, and decreases transmission delay.

### Brief Description of the Drawings:

FIG. 1 is an explanatory view of HARQ process states in a mobile station;
FIG. 2 is an explanatory view of HARQ process states in a base station;
FIG. 3 is a timing chart showing the timing of transmission of HARQ in synchronous transmission;
FIG. 4 is a timing chart showing the timing of transmission of HARQ in asynchronous transmission;
FIG. 5 shows signals exchanged between a base station and a mobile station;
FIG. 6 is a sequence chart showing the exchange of signals between a base station and a mobile station;
FIG. 7 is a sequence chart showing the exchange of signals between a base station and a mobile station when in the SHO (soft hand-over) state;
FIG. 8 is a sequence chart showing processing when NACK is erroneously received as ACK;
FIG. 9 is a sequence chart showing processing when ACK is erroneously received as NACK;
FIG. 10 shows the signals exchanged between a base station and a mobile station when time scheduling is used;
FIG. 11 is a sequence chart showing the exchange of signals between a base station and a mobile station when time scheduling is used;
FIG. 12 is a sequence chart for explaining problems that occur in the SHO state;
FIG. 13 is a view for explaining the problems that occur when NACK is mistaken for ACK;
FIG. 14 is a view for explaining the problems that occur when ACK is mistaken for NACK;
FIG. 15 shows an example of the configuration of a cellular system in which the present invention is applied;
FIG. 16 is a sequence chart showing the exchange of signals between a base station and a mobile station in the SHO state in the first embodiment;
FIG. 17 is a flow chart showing processing in the mobile station in the first embodiment;
FIG. 18 is a flow chart showing processing in the base station in the first embodiment;
FIG. 19 is a block diagram showing the configuration of the base station in the first embodiment;
FIG. 20 is a block diagram showing the configuration of the mobile station in the first embodiment;
FIG. 21 is a sequence chart showing the exchange of signals between a base station and a mobile station in the SHO state in the second embodiment;
FIG. 22 is a flow chart showing the processing in the mobile station in the second embodiment;
FIG. 23 is a flow chart showing processing in the base station in the second embodiment;
FIG. 24 is a block diagram showing the configuration of the base station in the second embodiment;
FIG. 25 is a block diagram showing the configuration of the mobile station in the second embodiment; and
FIG. 26 is a view for explaining an example of the transmission of a HARQ process state report in the fourth embodiment.

### Explanation of Reference Numbers

- 801, 1001, 1501, 1601: Reception processor
- 802, 1002, 1502, 1602: Control signal separator
- 803, 1503: Decoding processor
- 804, 1005, 1504, 1605: Buffer
- 805, 1505: Error detector
- 806, 1003, 1506, 1603: HARQ controller
- 807, 1507: Scheduler
- 808, 1006, 1508, 1606: Encoding processor
- 809, 1008, 1509, 1608: Control signal combiner
- 810, 1009, 1510, 1609: Transmission processor

- 1004, 1604: TFC selector
- 1007, 1607: Retransmission buffer
- 1010: Retransmission wait counter

### Best Mode for Carrying Out the Invention:

Explanation next regards preferable embodiments of the present invention with reference to the accompanying figures. In the following explanation, the present invention will be described using a case in which the communication control method of the present invention is applied to EUDCH in WCDMA.

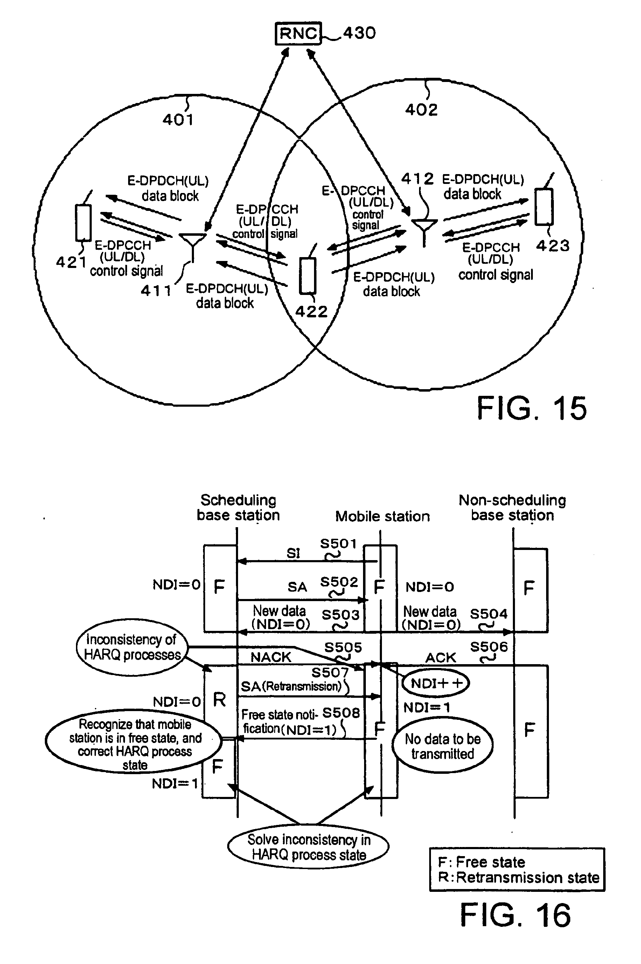

FIG. 15 shows an example of the configuration of a cellular system in which the communication control method of the present invention is applied. The first to sixth embodiments described hereinbelow are described as cases in which the communication control methods of the embodiments are applied to the cellular system shown in FIG. 15.

In the case shown in the figure, two base stations (BTS) 411 and 412 are provided, base stations 411 and 412 corresponding to cells 401 and 402, respectively. An area exists in which cell 401 and cell 402 overlap, and SHO (soft hand-over) between base station 411 and base station 412 is being offered to mobile station (MS) 422 located within this area. Mobile station 421 in cell 401 is connected only to base station 411, mobile station 423 in cell 402 is connected only to base station 412, and mobile stations 421 and 423 perform transmission and reception of E-DPDCH(UL) for transmitting EUDCH data and E-DPCCH(UUDL) for transmitting control signals. In addition, mobile station 422 is connected to both base stations 411 and 412, and this mobile station is transmitting and receiving E-DPDCH(UL) for transmitting EUDCH data and E-DPCCH(UUDL) for transmitting control signals. Radio network controller (RNC) 430 connected to base stations 411 and 412 is further provided. Here, the suffix "UL" represents an uplink, and the suffix "DL" represents a downlink.

Radio network controller (RNC) 430 notifies mobile stations and base stations of sets of TFC (Transport Format Combinations), which are combinations of transmission formats that each mobile station is permitted to use. A TFC set is referred to as "TFCS." TFC includes parameters such as the transmission time interval (TTI) and the number of information bits that are contained in TTI. The transmission rate of EUDCH changes according to the TFC, the higher the transmission rate the higher the noise rise applied to the base station. In this way, a base station, by controlling the maximum TFC that a mobile station is permitted to use, controls fluctuation of the noise rise in the base station. The control information for this control is transmitted and received between the base station and the mobile station by using E-DPCCH(UL/DL).

In addition, HARQ is used in this cellular system. Mobile stations 421, 422 and 423 use E-DPDCH to transmit data blocks at prescribed transmission intervals. Base stations 411 and 412 determine from the CRC of received data blocks whether the data blocks have been correctly decoded or not, and then transmit on the E-DPCCH of the downlink either ACK, which is a delivery confirmation signal indicating that correct reception was possible, or NACK, which is a delivery confirmation signal indicating a reception error. Mobile station 422, having set EUDCH circuits with two base stations, receives ACK/NACK signals from both base stations. When mobile station 422 receives ACK from either one of the base stations, mobile station 422 views that data block as having been correctly received and discards the data, and mobile station 422 performs retransmission only when NACK is received from both base station.

### First Embodiment:

Explanation next regards the communication control method according to the first embodiment.

In the first embodiment, the use of time/transmission rate scheduling and the use of synchronous transmission for HARQ will be assumed. It is further assumed that, regarding retransmissions, the base station will command, i.e., a base station-controlled retransmission method will be used.

In the present embodiment, a configuration is adopted in which TFCI is used to enable communication of the HARQ process states of mobile stations. TFCI are bit sequences indicating the TFC that prescribe the transmission data format, and of these bit sequences, two will be defined as the free state notification and the retransmission state notification. The use of five-bit TFCI is here assumed as shown in the following table. In other words, TFCI0 is defined as the free state and TFCI1 is defined as the retransmission state.

**Table 1**

| TFCI Classification | Bit Sequence | Definition |
|---|---|---|
| TFCI0 | 00000 | Free state |
| TFCI1 | 11111 | Retransmission state |
| TFCI2 | 01010 | TFC0 |
| TFCI3 | 10101 | TFC1 |
| TFCI4 | 00100 | TFC2 |

Mobile stations use the HARQ process state notification in the following cases:
(a) when the mobile station receives SA when in the free state, and moreover, there are no data to be transmitted in the buffer;
(b) when the mobile station receives SA when in the free state and the mobile station has data to be transmitted but does not transmit the data;
(c) when the mobile station is in the retransmission state and SA has been assigned in which the transmission rate is lower than required for retransmission; and
(d) when the mobile station is in the retransmission state and resources have not been assigned for N consecutive transmission timings of the relevant HARQ process after receiving NACK.

When any one of the above-described conditions (a) to (d) is satisfied, the mobile station transmits TFCI that reports the state of the relevant HARQ process and the current NDI at the designated transmission timing. At this point, a base station transmits ACK, or a mobile station receives ACK, and at the time point at which transmission of the data packets is determined to have ended, NDI is increased by "1" to update NDI in preparation for the next new data transmission.

A base station, upon receiving TFCI notifying of the HARQ process state, checks its own HARQ process state, and if there is an inconsistency, either corrects to match the mobile station or notifies the mobile station of the HARQ process state of the base station.

FIG. 16 is a sequence chart showing the exchange of signals between a base station and a mobile station in the SHO state in the first embodiment. The exchange of signals in the prior art that corresponds to the exchange of signals shown in FIG. 16 is shown in the above-described FIG. 12.

When the mobile station transmits SI to the scheduling base station in Step S501, the scheduling base station transmits an SA to the mobile station in Step S502, and the mobile station then sets the NDI to NDI=0 and transmits the data block to each of the base stations in accordance with the received SA in Steps S503 and S504. In the case shown here, the mobile station then receives NACK from the scheduling base station in Step S505, and receives ACK from the non-scheduling base station in Step S506. The mobile station has received at least one ACK, and therefore returns the HARQ process of its own station to the free state and increases the NDI by "1." However, the scheduling base station is in the retransmission state and therefore transmits an SA to the mobile station in Step S507 to assign resources for retransmission. If it is assumed that the data to be transmitted are no longer present in the mobile station at this time, the above-described condition (a) is satisfied, and the mobile station therefore transmits NDI=1 and TFCI0 in Step S508 to report that it is in the free state. The scheduling base station thereby recognizes that the mobile station is in the free state, and further, because the NDI is greater by "1" than the NDI being managed in the scheduling base station, determines that the mobile station does not hold the data that should be transmitted. The scheduling base station then returns the HARQ process of its own station to the free state and terminates assignment of resources to that mobile station. The present embodiment thus enables the resolution of inconsistencies in the HARQ processes between a scheduling base station and a mobile station, and can avoid the pointless assignment of resources.

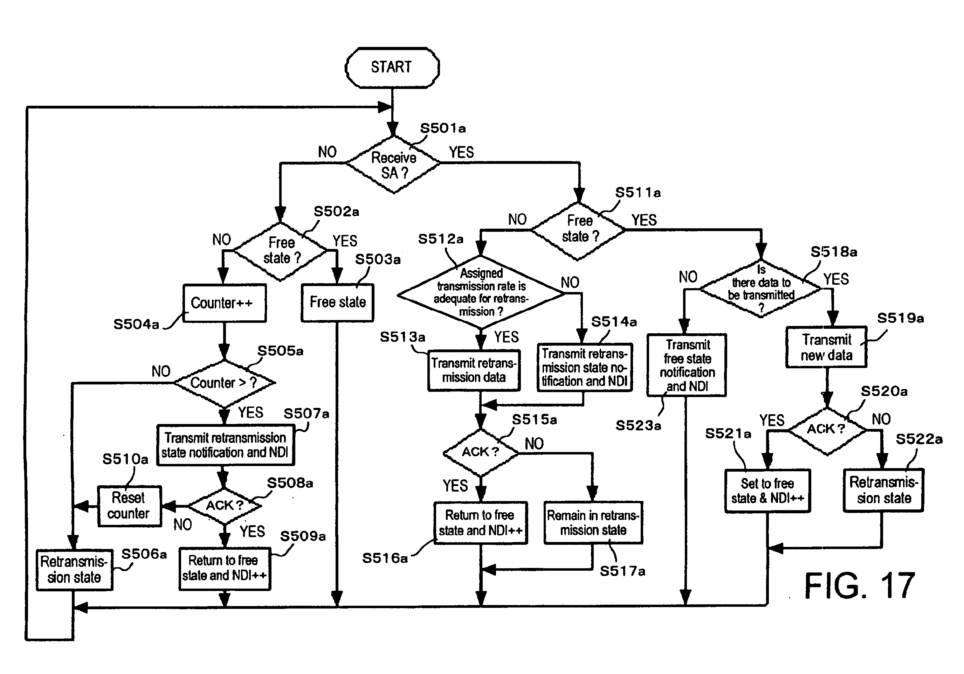

FIG. 17 is a flow chart showing the flow of processes of a mobile station from the timing of the reception of an SA up to the updating of the HARQ process state in the present embodiment.

The mobile station first determines whether an SA has been received or not at the SA reception timing as shown in Step S501a, and then proceeds to Step S511a if reception has been possible and to Step S502a if reception was not possible. The processing in the mobile station is next described dividing between a case in which reception was not possible and a case in which reception was possible.

When reception of the SA was not possible at the SA reception timing:

When the mobile station is not able to receive the SA at the SA reception timing, the mobile station first determines whether its own mobile station is in the free state or not in Step S502a. If in the free state, the mobile station returns to initial Step S501 a while remaining in the free state as shown in Step S503a. If not in the free state in Step S502a, i.e., if in the retransmission state, the mobile station increases the counter by "1" in Step S504a and then compares the value of the counter with the prescribed maximum number of retransmission waiting N in Step S505a. If the value of the counter does not exceed N, the mobile station returns to the initial Step S501a without changing from the retransmission state as shown in Step S56. If, on the other hand, the value of the counter is greater than N in Step S505a, the mobile station transmits a retransmission state notification and NDI in Step S507a. The mobile station here determines in Step S508a whether ACK has been received at a prescribed ACK/NACK transmission timing. If ACK has been received, this reception indicates that the base station is in the free state, and the mobile station therefore returns its own HARQ process state to the free state and increases the NDI by "1" in Step S509a. On the other hand, if ACK has not been received, i.e., if NACK has been received in Step S508a, this reception means that the base station is still in the retransmission state, and the mobile station therefore resets the counter in Step S510 and proceeds to Step S506a without changing from the retransmission state.

### When SA was received at the SA reception timing:

When the mobile station has received an SA at the SA reception timing, the mobile station determines whether its own station is in the free state or not in Step S511a. If not in the free state, i.e., if in the retransmission state, the mobile station determines in Step S512a whether the assigned transmission rate is adequate for transmission of the retransmission data or not. If the transmission rate is adequate, the mobile station transmits the retransmission data in Step S513a, and if inadequate, the mobile station transmits a retransmission state notification and NDI in Step S514a. The mobile station then determines in Step S515a whether it has received ACK at the prescribed ACK/NACK transmission timing, and if ACK has been received, returns the HARQ process state of its own station to the free state and increases the NDI by "1" in Step S516a and returns to the initial Step S501a. On the other hand, if ACK has not been received, i.e., if NACK has been received in Step S515a, the mobile station remains in the retransmission state and returns to the initial Step S501 a as shown in Step S517a. In this way, when the mobile station is in the retransmission state but has not been assigned the resources necessary for retransmission, the mobile station transmits a retransmission state notification whereby the retransmission state of the mobile station can be detected in the base station. The base station then transmits ACK, whereby the mobile station can recognize that the data waiting for retransmission have already been correctly received and can correct its own station to the free state.

Alternatively, when the mobile station is in the free state in Step S511a, the mobile station determines in Step S518a whether there are.data to be transmitted, and if there are data to be transmitted, transmits new data in Step S519a and determines in Step S520a whether ACK is received at the prescribed timing. If ACK is received, the mobile station returns the state of its own station to the free state and increases the NDI by "1" in Step S521a and then returns to the initial Step S501a. On the other hand, if ACK is not received in Step S520a, i.e., if NACK is received, the mobile station sets the state of its own station to the retransmission state in Step S522a and returns to the initial Step S501a. If there are no data to be transmitted in Step S518a, the mobile station transmits a free state notification and NDI in Step S523a and returns to the initial Step S501 a. In this way, the base station is able to detect that the mobile station is in the free state and can terminate the pointless assignment of resources.

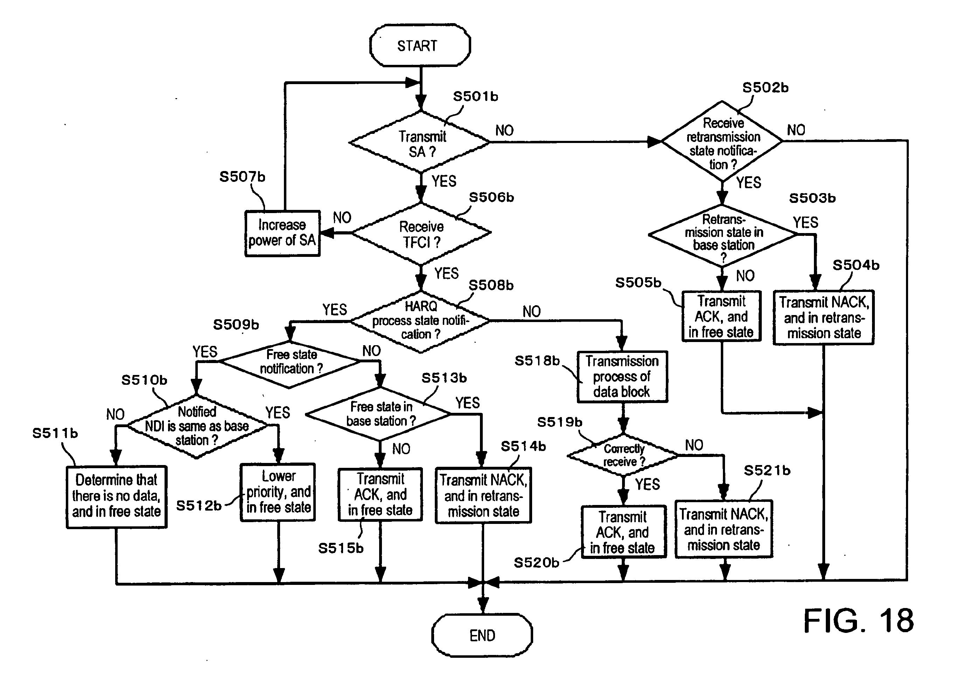

FIG. 18 is a flow chart showing the flow of processing in the base station from the timing of receiving SA up to the updating of the HARQ process state. The flow of processing in this base station is the counterpart of the flow of processing in the mobile station shown in FIG. 17.

The processing of the base station differs according to whether an SA has been transmitted at the SA transmission timing as shown in Step S501 b, the process moving to Step S506b if the SA has been transmitted and the process moving to Step S502b if the SA has not been transmitted. The processing at the base station is next explained by dividing between a case in which the SA has not been transmitted and a case in which the SA has been transmitted.

### When an SA has not been transmitted:

When the base station has not transmitted an SA, the base station determines in Step S502b whether a retransmission state notification has been received or nit, and if a retransmission state notification has been received, next determines in Step S503b whether the state in the base station is the retransmission state or not. If the state is the retransmission state, the base station both transmits NACK to the mobile station and then ends the process with this HARQ process maintained in the retransmission state in Step S504b. If the state in the base station is the free state in Step S503b, the base station transmits ACK in Step S505b, and then ends the process with the state in the base station remaining in the free state. If a retransmission state notification has not been received in Step S502b, the base station ends the process.

### When an SA has been transmitted:

If the base station has transmitted an SA, the base station determines in Step S506b whether TFCI has been received at the instructed transmission timing, and if TFCI has not been received, increases the transmission power of the SA in Step S507b and returns to Step S501b. These circumstances occur when the mobile station has not received the SA correctly, and by increasing the power, the SA error rate can be reduced. If reception of TFCI was possible in Step S506b, the base station determines in Step S508b whether the TFCI is a HARQ process state notification or not. If the TFCI is a HARQ process state notification, the base station next determines in Step S509b whether this notification reports the free state, and if the notification reports the free state, in Step S510b, the base station checks the NDI that is reported together with the notification to determine whether the NDI has the same value as the value being managed in the base station. Here, if the reported NDI is different from the NDI managed in the base station, the base station determines in Step S511b that data to be transmitted are not present in the mobile station, assumes the free state, terminates scheduling of this mobile station until there is a new data generation notification, and ends the process. Alternatively, if the NDI in Step S510b are the same, the base station determines in Step S512b that the mobile station is in a state of holding data but unable to transmit, and the base station therefore lowers the priority of this mobile station, assumes the free state, and ends the process. When a free state notification is received in this way, the pointless assignment of resources can be terminated.

If the state is not the free state in Step S509b, i.e., if the received HARQ process state notification is for a retransmission state, the base station checks in Step S513b whether the HARQ process state in the base station is the retransmission state or not. If the state in the base station is the retransmission state, the base station transmits NACK and ends the process with this HARQ process in the retransmission state in Step S514b. Alternatively, if in Step S513b the HARQ process in the base station is not the retransmission state, i.e., if the state is the free state, the base station transmits ACK and ends the process while remaining in the free state in Step S515b. In this way, when the mobile station is in the retransmission state and the base station is in the free state, the base station corrects the HARQ process of the mobile station to the free state by transmitting ACK.

If the received TFCI is not a HARQ state notification in Step S508b, the base station carries out the data block reception process in Step S518b and determines in Step S519b whether correct reception was possible or not. If the data block was correctly received, the base station transmits ACK, assumes the free state, and ends the process in Step S520b. If the base station determines in Step S519b that the data block was not received correctly, the base station transmits NACK, assumes the retransmission state, and ends the process in Step S521 b.

By means of the above-described flow, the base station updates the state of each HARQ process and carries out scheduling while taking into consideration of the HARQ process state and the volume of data that have not yet been received that is calculated from the difference between the buffer size reported by each mobile station and the received data size.

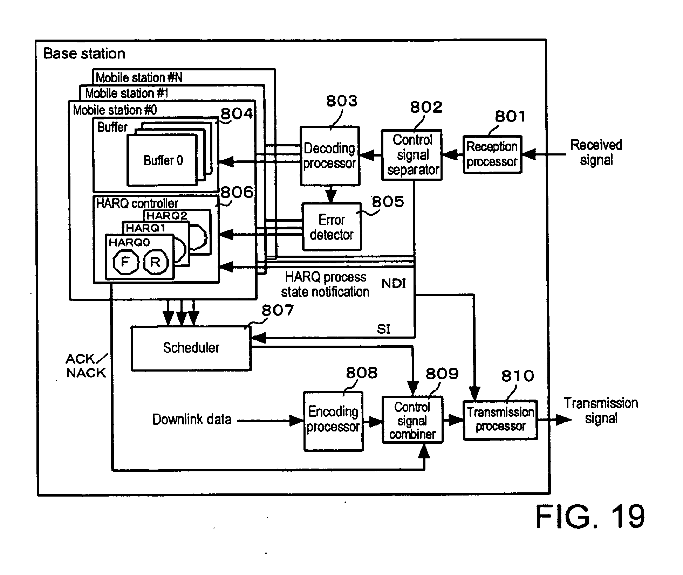

FIG. 19 is a block diagram showing the configuration of a base station used in the present embodiment.

The base station is provided with: reception processor 801 for carrying out such processes as the despreading of received signals; control signal separator 802 for separating received signals that have undergone despreading into control signals and data; decoding processor 803 for decoding the separated data; buffer 804 for accumulating data that have been decoded, one or a plurality of buffers 804 being prepared for each mobile station; error detector 805 for detecting errors in the decoded data; HARQ controller 806 provided corresponding to each mobile station for controlling HARQ process states; scheduler 807 for carrying out scheduling for each mobile station; encoding processor 808 for performing an encoding process for downlink data; control signal combiner 809 for combining control signals and downlink data that have been encoded; and transmission processor 810 for carrying out processing such as a spreading process upon output signals from control signal combiner 809 to produce transmission signals.

In a base station of this configuration, processing such as the despreading of received signals is carried out in reception processor 801, and received signals that have undergone processing in reception processor 801 are then separated into control signals and data in control signal separator 802. Of the control signals that have been separated, SI that includes information for scheduling is sent to scheduler 807 and HARQ process state notifications and NDI are sent to HARQ controller 806. The separated data are decoded in decoding processor 803, and then accumulated in buffers 804, one or a plurality of buffers being provided for each mobile station. During the decoding process in decoding processor 803, error detector 805 carries out error detection for the decoded data, and the result of this detection is reported to HARQ controllers 806 that have been prepared for each mobile station.

HARQ controllers 806 both control states for each HARQ process and, upon receiving a HARQ process state notification, update the HARQ process states by means of the procedure shown in FIG. 18. In addition, information relating to the HARQ states of HARQ controllers 806 and information of the buffer states are periodically sent to scheduler 807, and further, when there are ACK/NACK signals to be transmitted, these signals are sent to control signal combiner 809.

Scheduler 807 carries out scheduling of each mobile station based on the SI, HARQ states, and buffer states that have been received from each mobile station or the priority of data flow that is reported by the higher-level layer. Any type of generally known scheduling method may be adopted as the scheduling method, including, for example, a method of assigning transmission opportunities in order to mobile stations having data, and a method of assigning transmission opportunities while giving priority to mobile stations that have data with a high degree of priority. Information relating to scheduling is combined with the data of the downlinks for each mobile station in control signal combiner 809, and then, after subjecting the data following combining to transmission processing such as spreading in transmission processor 810, the data are transmitted by means of the downlinks.

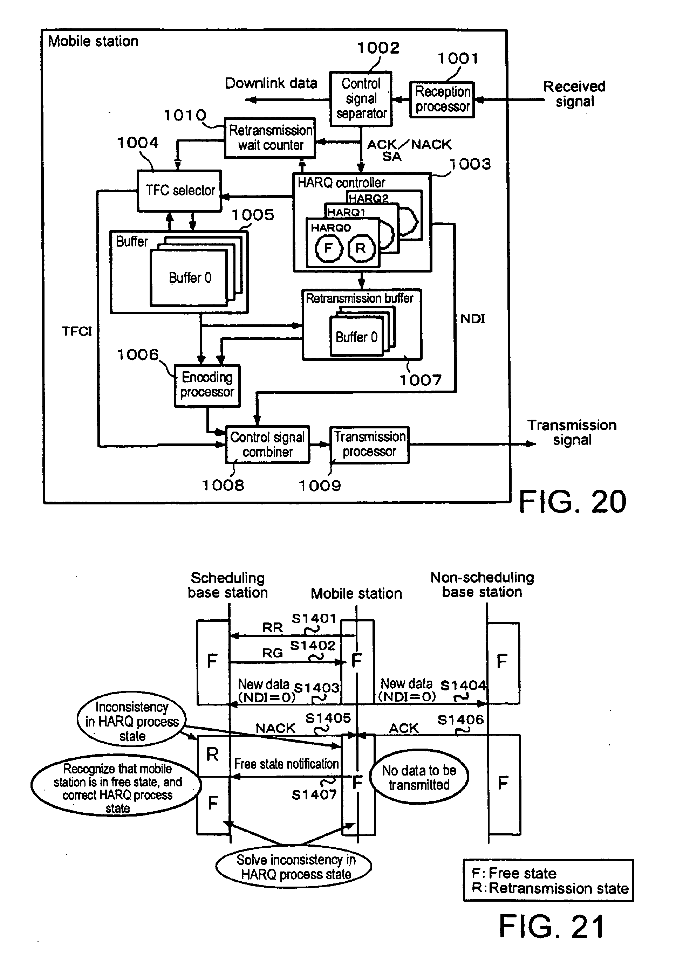

FIG. 20 is a block diagram showing the configuration of a mobile station that is used in the present embodiment.

The mobile station is provided with: reception processor 1001 for implementing reception processes such as despreading received signals; control signal separator 1002 for separating received signals that have undergone despreading into data and control signals; HARQ controller 1003 for controlling HARQ processes in the mobile station; TFC selector 1004 for selecting TFC from among reported TFCS; buffer 1005 for storing data to be transmitted; encoding processor 1006 for subjecting the data to be transmitted to an encoding process; retransmission buffer 1007 for storing transmission data for retransmission; control signal combiner 1008 for combining control signals with data that have undergone the encoding process; transmission processor 1009 for subjecting signals from control signal combiner 1008 to a process such as spreading to produce transmission signals; and retransmission wait counter 1010 for counting retransmission waiting.

In the mobile station, reception processor 1001 subjects received signals to reception processing such as despreading, and control signal separator 1002 separates the received signals that have undergone despreading into data and control signals. Of the control signals that have been separated, ACK/NACK and SA are sent to HARQ controller 1003. HARQ controller 1003 updates the states of the relevant HARQ processes in accordance with ACK/NACK. The processing in the mobile station from this point differs greatly depending on whether the state of the HARQ process that is indicated by the SA is the free state or the retransmission state, and the following explanation is therefore divided between these two cases.

### When the state of the HARQ process indicated by the SA is the free state:

When the state of the HARQ process indicated by the SA is the free state, the state of this process is reported together with the maximum transmission rate information contained in the SA to TFC selector 1004. TFC selector 1004 selects TFC in accordance with prescribed standards from among the TFC that are no greater than the maximum TFC indicated by the maximum transmission rate information. At this time, TFC selector 1004 selects TFC by referring to the degree of priority that is set for each data flow as the selection criteria, whereby data flow having a higher degree of priority has a higher transmission rate, and the corresponding TFCI is transmitted to control signal combiner 1008. TFC selector 1004 further refers to buffer 1005, and when there are no data in buffer 1005 that are to be transmitted, TFC selector 1004 sends TFCI0, which is a free state notification, to control signal combiner 1008. The selected TFC is further reported to buffer 1005, and data are extracted in accordance with the TFC from buffer 1005 and sent to encoding processor 1006. At this time, a copy of the extracted data block is stored in retransmission buffer 1007.

### When the state of the HARQ process indicated by the SA is the retransmission state:

When the state of the HARQ process indicated by the SA is the retransmission state, the state of this process is reported together with the maximum transmission rate information contained in the SA to retransmission buffer 1007 from HARQ controller 1003. When the maximum transmission rate is higher than the transmission rate of the relevant retransmission data, the data to be retransmitted are sent from retransmission buffer 1007 to encoding processor 1008. After undergoing encoding, these data are combined with control signals such as TFCI and NDI in control signal combiner 1008, subjected to processing such as spreading in transmission processor 1009, and then transmitted. Alternatively, if the maximum transmission rate is lower than the transmission rate of the retransmission data, HARQ controller 1003 reports this information to TFC selector 1004, and TFC selector 1004 then selects TFCI1, which is a retransmission state notification, and sends this notification to control signal combiner 1008.

### When there is a retransmission state HARQ process:

In addition, when there is a HARQ process of the retransmission state in the mobile station, HARQ controller 1003 checks whether retransmission instructions exist for each transmission timing of the relevant HARQ process or not, and if there are no retransmission instructions, HARQ controller 1003 adds "1" to the value of retransmission wait counter 1010 provided for each HARQ process. When retransmission wait counter 1010 exceeds a prescribed maximum number N of retransmission waiting, HARQ controller 1003 reports this situation to TFC selector 1004, and TFC selector 1004 sends TFCI1, which is the retransmission state notification, to control signal combiner 1008.

Control signal combiner 1008 combines TFCI and NDI and data blocks to be transmitted, the combined data are subjected to processing such as spreading in transmission processor 1009, and then transmitted by way of an uplink.

As described in the foregoing explanation, the present embodiment can resolve inconsistencies in HARQ process states that occur when the scheduling base station during the SHO state sends NACK and another SHO base station sends ACK, and moreover, when the mobile station does not have new data that should be transmitted. Since the proportion of SHO area in a WCDMA system is typically 40 to 60% and it is difficult to switch scheduling base stations at high speed according to fluctuation in the propagation loss, it is highly likely that the above-described situation occurs. In this situation, the base station pointlessly assigns resources to a mobile station that does not have data that should be transmitted, and to this extent, resources cannot be assigned to mobile stations that hold data that should be transmitted, whereby the efficiency of utilization of resources falls and system throughput deteriorates. The present embodiment can resolve these situations and thus improve system throughput. In addition, a similar situation can be caused by a reception error of NACK or ACK in a mobile station. However, the embodiment of the present invention can resolve inconsistencies in the HARQ process states in the event of a reception error of NACK or ACK in a mobile station and can further raise the efficiency of utilization of resources and improve the system throughput.

As a further advantage of the present embodiment, a base station can detect the reception error of an SA in a mobile station. In other words, when a base station, despite having instructed the transmission of a data block by means of an SA, fails to receive a data block or a HARQ process state notification at the indicated timing, the base station can determine that the mobile station was unable to receive the SA. Therefore, in this type of situation, the base station can increase the transmission power of the SA and again transmit the SA and can thereby decrease the error rate of the SA. When the SA is in error, the mobile station is unable to transmit a data block even though the base station is securing resources for the mobile station to which the base station has transmitted the SA. Accordingly, the transmission delay of this mobile station increases, whereby not only does the user throughput fall, but the secured resources cannot be assigned to other mobile stations that are waiting to transmit data, and the overall system throughput therefore falls. The present embodiment can decrease the probability of occurrence of such situations and can therefore increase both system throughput and user throughput and can decrease transmission delay.

### Second Embodiment:

Explanation next regards the communication control method according to the second embodiment.

The second embodiment assumes the use of time scheduling and the use of asynchronous transmission for HARQ. In addition, mobile stations are assumed to make determinations regarding retransmissions. In other words, the use of a spontaneous retransmission method will be assumed. As in the first embodiment, this second embodiment also uses TFCI to transmit HARQ process state notifications. More specifically, TFCI0 is defined as the free state, and TFCI1 is defined as the retransmission state.

A mobile station uses a HARQ process state notification in the following cases:
(a) when the mobile station has received ACK, and further, the mobile station has no data in its buffer that should be transmitted;
(b) when the mobile station has received NACK, and further, after receiving the NACK, the maximum transmission rate is continuously lower than the required transmission rate for resending over the interval of W frames; and
(c) when the mobile station is unable to receive ACK or NACK at a prescribed timing T even though the mobile station has transmitted a data block, and further, the maximum transmission rate is continuously lower than the required transmission rate for resending over an interval of W frames from T.

When any one of the above-described conditions (a) to (c) is satisfied, the mobile station transmits TFCI to the base station to report the state of the relevant HARQ process. Upon receiving the TFCI for reporting the HARQ process state, the base station checks the HARQ process state in that base station, and when an inconsistency has occurred, either corrects the HARQ process state in that base station to match the mobile station or reports the HARQ process state of the base station to the mobile station.

FIG. 21 is a sequence chart showing the exchange of signals between base stations and a mobile station in the SHO state in the second embodiment.

The mobile station and base stations transmit and receive RR and RG at prescribed periods as shown in Steps S1401 and S1402. The mobile station transmits a data block to each base station at any timing and at a transmission rate no greater than the designated maximum transmission rate with NDI=0. In this case, it is assumed that the mobile station receives NACK from the scheduling base station in Step S1405 and receives ACK from the non-scheduling base station in Step S1406. Accordingly, although a retransmission state occurs at the scheduling base station, the mobile station enters the free state, and an inconsistency in HARQ process states thus occurs. Upon receiving the ACK, the mobile station checks the data in its own buffer, and when there are no data to be transmitted, the mobile station transmits a free state notification, i.e., TFCI0, in Step S1407. This case conforms with the above-described condition (a), and the base station therefore recognizes that the mobile station is in the free state and determines that the mobile station does not hold the data that were to be transmitted. The base station then returns the HARQ process to the free state and terminates the assignment of resources to this mobile station. In this way, inconsistencies between the HARQ process states between the scheduling base station and the mobile station can be resolved in the present embodiment, and the pointless assignment of resources can be avoided.

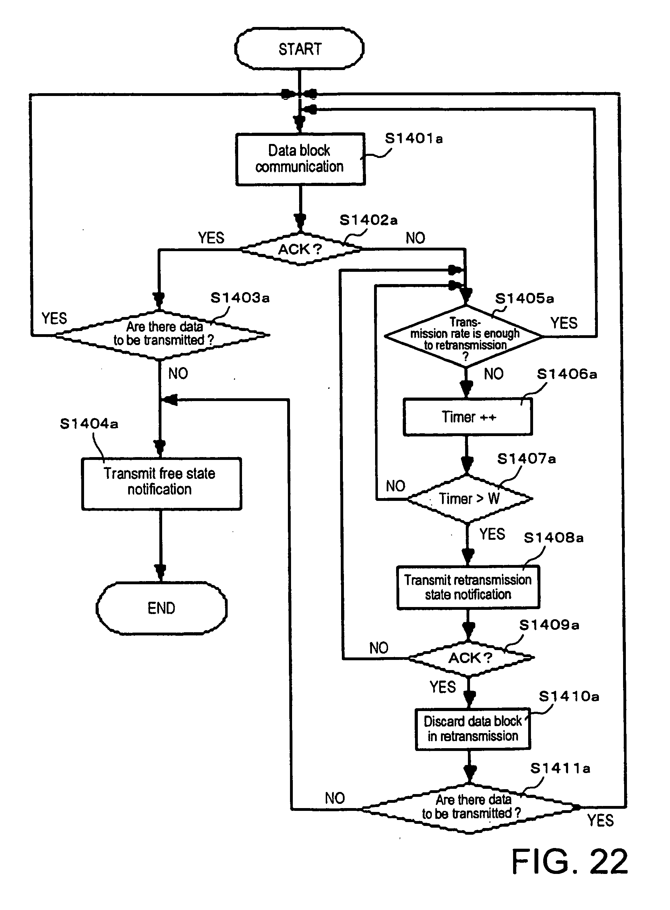

FIG. 22 is a flow chart showing the process of updating the HARQ process state in the mobile station in the present embodiment.

The mobile station transmits a data block at a transmission rate no greater than the maximum transmission rate permitted at any time in Step S1401a, and determines whether ACK has been received at the prescribed timing from the base station or not in Step S1402a. When the mobile station has received ACK at the prescribed timing, the mobile station checks the data volume in the buffer of that mobile station in Step S1403a and determines whether there are data that should be transmitted. If there are data that should be transmitted, the mobile station returns to Step S1401a to subsequently transmit the data block, but if there are no data that should be transmitted, the mobile station transmits a free state notification in Step S1404a and ends the process. The base station can detect that the mobile station has completed sending all data in the buffer, and if the base station is in the retransmission state, the base station can correct this state and thus avoid the pointless assignment of resources. As a result, the system throughput increases.

If ACK has not been received in Step S1402a, i.e., if NACK has been received at the prescribed timing, the mobile station determines in Step S1405a whether the maximum transmission rate permitted is adequate for transmitting the data block that should be retransmitted. In this case, when the maximum transmission rate is determined to be sufficient, the mobile station returns to Step S1401a to transmit the retransmission data at any timing. On the other hand, if the maximum transmission rate is not adequate, the mobile station increases the timer by a prescribed time interval in Step S1406 and compares the value of the timer with a prescribed maximum retransmission wait time interval W in Step S1407a. If the value of the timer is not greater than W, the mobile station returns as far as Step S1405a, but if the value of the timer is greater than W, the mobile station transmits a retransmission state notification in Step S1408a. The mobile station then determines whether ACK has been received or not at the prescribed timing in Step S1409a, and if ACK has been received, discards the data block that is being transmitted in Step S1410a and determines whether there are data that should be transmitted in Step S1411a. If it is determined in Step S1411a that there are data that are to be transmitted, the mobile station returns to Step S1401a to continue transmission of data blocks at any timing, but if there are no data to be transmitted, the mobile station proceeds to Step S1404a to transmit a free state notification and ends the process. If it is determined in Step S1409a that ACK has not been received, i.e., if NACK has been received at a prescribed timing, the process of the mobile station returns to Step S1405a.

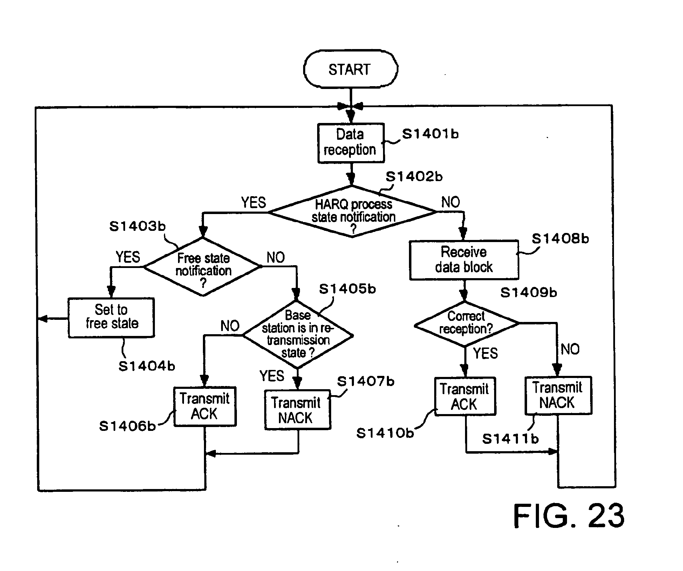

FIG. 23 is a flow chart showing the processing relating to the reception of data in the base station in the present embodiment.

The base station receives data in Step S1401 b and checks whether the TFCI that has been sent together with the data is a HARQ process state notification or not in Step S1402b. If the TFCI is a HARQ process state notification, the base station determines whether this HARQ process state notification is a free state notification or not in Step S1403b, and if a free state notification has been received, the HARQ process state in the base station is also set to the free state in Step S1404b and the base station returns to Step S1401b to receive the next data. Therefore, when the mobile station is in the free state but the base station is in the retransmission state, the pointless assignment of resources for retransmission is circumvented and the system throughput is thus improved.

If it is determined in Step S1403b that the HARQ process state notification is not a free state notification, i.e., if a retransmission state notification has been received, the base station checks the HARQ process state in the base station in Step S1405b to determine whether the base station is in the retransmission state or nor. If the base station is not in the retransmission state, i.e., if it is the free state, the base station transmits ACK in Step S1406b, but if the base station is in the retransmission state, the base station transmits NACK in Step S1407b. In either case, the base station returns to Step S1401b to receive the next data. Accordingly, when the mobile station is waiting to retransmit for a data block that the base station has already completed receiving, the base station can correct the state of the mobile station to the free state. As a result, the situation can be avoided in which the mobile station pointlessly waits for the assignment of retransmission resources and thus prevents the transmission of other data, and the user throughput is thus improved.

If it is determined in Step S1402b that the TFCI is not a HARQ process state notification, the base station receives a data block in Step S1408b and determines whether correct reception of this data block was possible or not in Step S1409b. If the base station was able to correctly receive the data block, the base station transmits ACK in Step S1410b, and if the base station was unable to correctly receive, the base station transmits NACK in Step S1411b. In either case, the base station returns to Step S1401b to receive the next data. The base station retransmits the above-described operations.

Thus, when the mobile station is in the retransmission state but the base station fails to recognize this state and does not assign adequate resources for retransmission, the mobile station can notify the base station that the mobile station is waiting to retransmit; and when the base station has already been able to correctly receive, the base station can send ACK to notify the mobile station and correct the HARQ process of the mobile station. Accordingly, the present embodiment can avoid a situation in which the inability to transmit retransmission data prevents the transmission of other new data and thus improves the user throughput. In addition, a base station can avoid the pointless assignment of resources to this mobile station and thus raise the efficiency of utilization of resources and improve the system throughput.

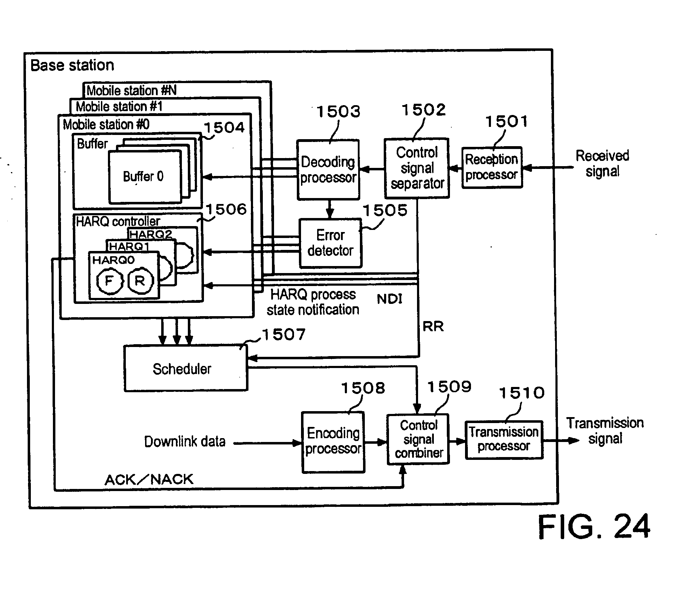

FIG. 24 shows the configuration of a base station used in this embodiment.

As in the base station shown in FIG. 19, the base station is provided with: reception processor 1501 for carrying out processes such as despreading received signals; control signal separator 1502 for separating received signals that have undergone despreading into control signals and data; decoding processor 1503 for decoding the separated data; buffer 1504 for accumulating data following decoding, one or a plurality of buffers being prepared for each mobile station; error detector 1505 for detecting errors in the decoded data; HARQ controller 1506 provided corresponding to each mobile station for managing HARQ process states; scheduler 1507 for carrying out scheduling for each mobile station; encoding processor 1508 for carrying out encoding processes for downlink data; control signal combiner 1509 for combining control signals with downlink data that have undergone encoding; and transmission processor 1510 for carrying out processes such as spreading for output signals from control signal combiner 1509 to produce transmission signals.

In the base station, received signals are subjected to processing such as despreading in reception processor 1501, following which the signals are separated into control signals and data in control signal separator 1502. The separated data are decoded in decoding processor 1503 and then accumulated in buffers 1504, one or a plurality of buffers being provided for each mobile station. At the same time, the decoded data are subjected to error detection by error detector 1505, and the results of this detection are reported to HARQ controllers 1506 that are provided for each mobile station. Of the separated control signals, the RR is sent to scheduler 1507, and the HARQ process state notification and NDI are sent to HARQ controller 1506.

HARQ controller 1506 not only manages the states for each HARQ process, but also changes the state of the relevant HARQ process to the free state upon receiving a free state notification, checks the state of the relevant HARQ process upon receiving a retransmission state notification, generates ACK if this state is the free state and generates NACK if this state is the retransmission state, and sends these ACK and NACK to control signal combiner 1509. Information relating to the HARQ state of HARQ controller 1506 and information of the buffer states are periodically sent to scheduler 1507.

Scheduler 1507 carries out scheduling of each mobile station based on such factors as the RR, HARQ state and the buffer states that have been received from each mobile station, or the degree of priority of data flow that is reported by the higher-level layer. As the scheduling method, any generally known scheduling method may be adopted including a method of assigning transmission opportunities in order to mobile station having data or a method of assigning transmission opportunities that gives priority to mobile stations having data with a high degree of priority. Information relating to scheduling is combined in control signal combiner 1509 with data of downlink for each mobile station, and after undergoing combining, the data are subjected to a transmission process such as spreading in transmission processor 1510 and then transmitted by means of downlinks.

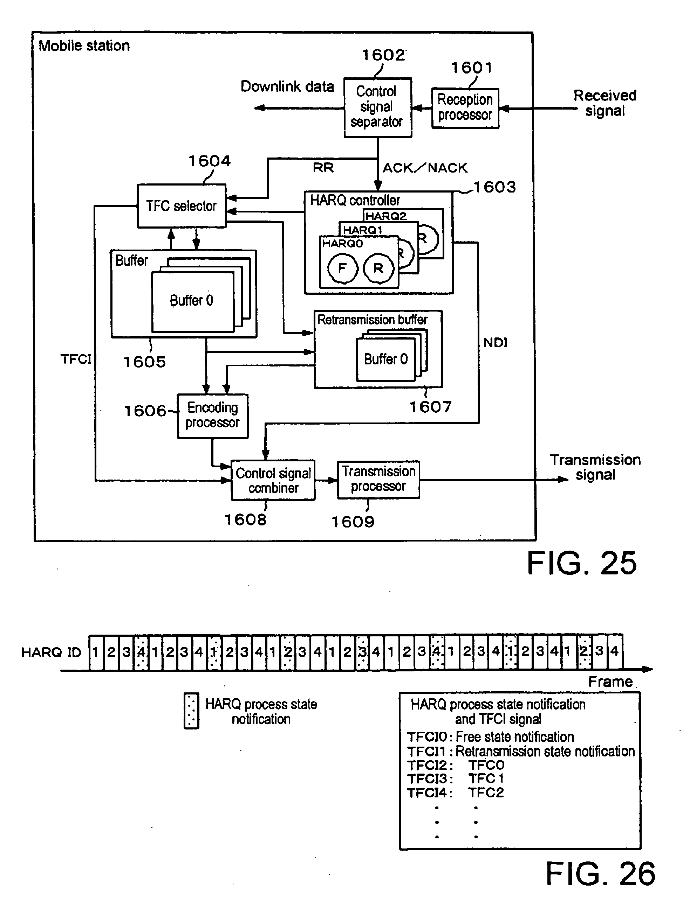

FIG. 25 shows the configuration of a mobile station used in the present embodiment.

The mobile station is provided with: reception processor 1601 for implementing a reception process such as despreading for received signals; control signal separator 1602 for separating the received signals that have undergone despreading into data and control signals; HARQ controller 1603 for controlling the HARQ processes in the mobile station; TFC selector 1604 for selecting TFC from among the reported TFCS; buffer 1605 for storing data to be transmitted; encoding processor 1606 for carrying out an encoding process upon data to be transmitted; retransmission buffer 1607 for storing transmission data for retransmission; control signal combiner 1608 for combining control signals with data that have undergone the encoding process; and transmission processor 1609 implementing a process such as spreading upon signals from control signal combiner 1608 to produce transmission signals.

In the mobile station, received signals are subjected to a reception process such as despreading by reception processor 1601, and control signal separator 1602 then separates the data and control signals from the received signals that have undergone despreading. Of the separated control signals, ACK and NACK are sent to HARQ controller 1603. HARQ controller 1603 updates the state of the relevant HARQ process in accordance with the ACK/NACK. When ACK has been received, HARQ controller 1603 reports this information to TFC selector 1604, and TFC selector 1604 checks the data volume in buffer 1605 and sends TFCI0, which is a free state notification, to control signal combiner 1608 when there are no new data to be transmitted. Of the separated control signals, RG is sent to TFC selector 1604, and the maximum transmission rate in TFC selector 1604 is updated by means of this RG. Based on information regarding the presence or absence of retransmission data that is reported by HARQ controller 1603, TFC selector 1604 further determines to transmit retransmission data if retransmission data exist and otherwise determines to transmit new data.

When transmitting retransmission data, TFC selector 1604 checks whether the use of the same TFC as when initially transmitting is permitted, and if the use is not permitted, advances the retransmission wait timer (not shown) by a prescribed time interval. When the value of the timer equals or exceeds a prescribed maximum wait time interval, TFC selector 1604 transmits TFCI1, which is a retransmission state notification, to control signal combiner 1608. When the same TFC that was used when initially transmitting can be used, TFC selector 1604 is caused to extract the retransmission data block from retransmission buffer 1607 and send data block to encoding processor 1606.

On the other hand, when transmitting new data, TFC selector 1604 selects TFC in accordance with prescribed criteria from among the TFC that is not greater than the maximum TFC that has been updated by RG. At this time, TFC selector 1604 refers to the degree of priority set for each data flow as the selection criteria and selects TFC such that data flows with higher priority have higher transmission rates. TFC selector 1604 reports the selected TFC to buffer 1605 such that data are extracted from the buffer and sent to encoding processor 1606. At this time, a copy of the extracted data block is stored in retransmission buffer 1607.

The data block that is sent to encoding processor 1606 is encoded, combined with control signals such as TFCI, NDI, RV, and HARQ ID in control signal combiner 1608, subjected to a process such as spreading in transmission processor 1609, and then transmitted.

As in the first embodiment, the present embodiment as described in the foregoing explanation can resolve inconsistencies in HARQ process states that occur when the scheduling base station during a SHO state sends NACK and another SHO base station sends ACK, and moreover, the mobile station does not have new data to be transmitted. When inconsistencies in HARQ process states occur, base stations pointlessly assign resources to mobile stations that do not have data to be transmitted, and to this extent, resources cannot be assigned to mobile stations that have data that should be transmitted, whereby the efficiency of utilization of resources falls and the system throughput deteriorates. The present embodiment enables the resolution of such situations and thus improves system throughput. In addition, a similar situation occurs due to reception errors of NACK or ACK in a mobile station, but the present embodiment enables a resolution of inconsistencies in HARQ process states when a reception error of NACK/ACK occurs in a mobile station, thereby raising the efficiency of utilization of resources and improving system throughput.

### Third Embodiment:

Explanation next regards the communication control method of the third embodiment.

As in the first embodiment, in the third embodiment, the use of time/transmission rate scheduling is assumed, and HARQ is assumed to employ synchronous transmission. Further, base stations are assumed to command regarding retransmissions. In other words, the use of a base station-controlled retransmission method will be assumed.

In the third embodiment, when a mobile station receives NACK from the scheduling base station and receives ACK from another SHO base station, and moreover, does not have data in its buffer, the mobile station transmits a "no data" notification as the HARQ process state notification. TFCI0 is used as the "no data" notification, and upon receiving TFCI0 from a mobile station, a base station corrects the relevant HARQ process to the free state and does not assign retransmission resources.

The adoption of the above-described "no data" notification enables a circumvention of the pointless assignment of resources resulting from inconsistencies in the HARQ process between a scheduling base station and a mobile station. Further, in contrast to the first embodiment, problems resulting from reception errors of ACK or NACK cannot be resolved, but other measures can be devised such as increasing the transmission power of ACK/NACK or redundancy to lower the error rate of ACK/NACK. In contrast, inconsistencies in HARQ process that occur during SHO are a fundamental problem that cannot be avoided by other methods. Therefore, the present embodiment can avoid the pointless assignment of resources by the scheduling base station during SHO and thus improve system throughput while reducing the amount of process state notifications transmitted by mobile stations.

In addition, although TFCI is used as the "no data" notification in the present embodiment, "0" size in BOI that is included in SI may also be defined for use as the "no data" notification.

### Fourth Embodiment:

Explanation next regards the communication control method according to the fourth embodiment.

As in the first embodiment, the use of time/transmission rate scheduling will be assumed in the fourth embodiment, and the use of synchronous transmission will be assumed for HARQ. In addition, base stations will be assumed to command relating to retransmissions. In other words, the use of a base station-controlled retransmission method will be assumed.

In the fourth embodiment, the mobile station reports the state of the HARQ process at a prescribed period. FIG. 26 shows an example of the transmission of a HARQ process state notification for a case in which four HARQ processes are set in the mobile station.

In the present embodiment, each HARQ process sends a HARQ process state notification once every five times. The HARQ processes for which state notifications are transmitted are indicated by the frames with hatching in the figure. TFCI0 and TFCI1 are used as the HARQ process state notifications, as in the first embodiment, TFCI0 being the free state notification and TFCI1 being the retransmission state notification. When the transmission timing for a HARQ process state notification arrives, the mobile station uses these HARQ process state notifications to report the state at that time to the base station. In the other frames, the mobile station transmits data in accordance with the instructions of the base station. The transmission timing of the HARQ process state notifications is already known in the base station, and the base station therefore does not perform scheduling of data transmission at these timings. Upon receiving a HARQ process state notification, the base station checks the current state of the relevant HARQ process, and corrects the state to that of the notification from the mobile station if the state is different.

The present embodiment enables the base station and mobile station to correct inconsistencies in HARQ process states at a prescribed period. As a result, the present embodiment enables circumvention of pointless assignment of resources and improves throughput.

### Fifth Embodiment:

As in the first embodiment, the fifth embodiment assumes the use of time/transmission rate scheduling and further assumes the use of synchronous transmission for HARQ. Further, the base station is assumed to command relating to retransmissions, i.e., the use of a base station-controlled retransmission method is assumed.

In the first embodiment, a mobiie station, upon receiving an SA, transmitted a HARQ process state notification at the transmission timing designated by SA, but in the fifth embodiment, a mobile station transmits a HARQ process state notification when there are no data to be transmitted at time T at which SA is received, and further, when no data that should be transmitted occur within a prescribed time interval from time T.

As a result, in addition to the advantages of the first embodiment, the present embodiment can avoid the frequent transmission of HARQ process state notification.

### Sixth Embodiment:

As in the second embodiment, the sixth embodiment assumes the use of time scheduling and the use of asynchronous transmission for HARQ. In addition, mobile stations are to make determinations relating to retransmissions, i.e., the use of a spontaneous transmission method is assumed.

In the second embodiment, a mobile station transmitted a HARQ process state notification immediately after receiving ACK, but in the sixth embodiment, a mobile station transmits a HARQ process state notification if there are no data to be transmitted at time T when ACK is received, and further, when no data to be transmitted occur within a prescribed time interval from time T.

As a result, in addition to the advantages obtained by the second embodiment, the present embodiment can further avoid the frequent transmission of HARQ process state notifications.

The base station of a cellular system is typically provided with a computer in addition to an antenna and radio transceiver for controlling the operations of the base station. Accordingly, the base station in each of the above-described embodiment may be realized by the reading and execution of programs for realizing the above-described functions by a computer that constitutes the base station. Similarly, the mobile station in each of the above-described embodiments may be realized by the reading and execution of programs for realizing the above-described functions by a computer that constitutes the mobile station.

Such programs may for example be recorded on a recording medium that can be read by a computer, this recording medium then being mounted in a computer and thus read into the computer. Alternatively, such programs may be read into a computer by way of a network such as the Internet. Accordingly, such programs, recording media in which such programs are recorded, and program products that include such programs are all included within the scope of the present invention.

## Claims

1. A communication control method in a radio communication system having a base station (411, 412), and a mobile station (421, 423) in which a radio channel is set to said base station (411, 412); said communication control method comprising the steps of:
said base station (411, 412) notifying said mobile station (421, 423) of transmission resource assignment information indicating assignment of transmission resources;
said mobile station (421, 423) transmitting a data block in accordance with said transmission resource assignment information;
said base station (411, 412) transmitting a delivery confirmation signal indicating whether said data block has been correctly received or not;
said mobile station (421, 423) retransmitting said data block upon receiving said delivery confirmation signal indicating a reception error;
said mobile station (421, 423) completing the transmission of said data block upon receiving said delivery confirmation signal indicating correct reception;
said mobile station (421, 423) transmitting a transmission process state notification reporting whether said mobile station (421, 423) is in a retransmission state, which is a state of waiting for a retransmission, or a free state, which is a state of not waiting for a retransmission; and
said base station (411, 412) determining and transmitting the assignment of said transmission resources to said mobile station (421, 423) in accordance with the transmission process state in said mobile station (421, 423),
**characterized by** said mobile station (421, 423), upon having received said transmission resource assignment information said mobile station not having data to be transmitted, transmits a first transmission process state notification, and upon having received said transmission resource assignment information said mobile station having data to be transmitted but said mobile station (421, 423) does not transmit the data, transmits a second transmission process state notification.

2. The communication control method according to claim 1, wherein said mobile station (421, 423) transmits said transmission process state notification at a prescribed period.

3. The communication control method according to claim 1, wherein said mobile station (421, 423) transmits said transmission process state notification according to reception of said delivery confirmation signal.

4. The communication control method according to any one of claims 1 to 3, wherein said mobile station (421, 423) transmits said transmission process state notification when there is no data to be transmitted in a buffer of said mobile station (421, 423) at ACK reception time, which is time of receiving said delivery confirmation signal indicating correct reception, and moreover, data to be transmitted has not occurred within a prescribed time interval from said ACK reception time.

5. The communication control method according to any one of claims 1 to 4, wherein said mobile station (421, 423) transmits said transmission process state notifications when resources have not been assigned that are necessary for a retransmission corresponding to said delivery confirmation signal indicating said reception error during a prescribed time interval from NACK reception time, which is time of receiving said delivery confirmation signal indicating a reception error.

6. The communication control method according to any one of claims 1 to 5, wherein said mobile station (421, 423) transmits said transmission process state notification and then, upon receiving said delivery confirmation signal indicating correct reception at a prescribed timing, discards data that are being transmitted and halts retransmission.

7. The communication control method according to any one of claims 1 to 6, wherein said mobile station (421, 423) transmits said transmission process state notification when there are no data to be transmitted in a buffer of said mobile station (421, 423) at an assignment reception time, which is time of receiving said transmission resource assignment information, and moreover, no data to be transmitted occurs within a prescribed time interval from the SA reception time.

8. The communication control method according to any one of claims 1 to 7, wherein when said base station (411, 412) transmits said transmission resource assignment information, and then receives neither a data block nor said transmission process state notification from said mobile station (421, 423) over a prescribed interval, said base station (411, 412) increases transmission power of said transmission resource assignment information by a prescribed value and then transmits.

9. The communication control method according to any one of claims 1 to 7, wherein said base station (411, 412), upon receiving said second transmission process state notification, lowers priority of assigning transmission resources to said data block.

10. The communication control method according to any one of claims 1 to 9, wherein maximum transmission rate and transmission time that said mobile station (421, 423) is permitted to use are assigned as said transmission resources.

11. The communication control method according to any one of claims 1 to 9, wherein maximum transmission rate that said mobile station (421, 423) is permitted to use is assigned as said transmission resources.

12. A radio communication system comprising:
a base station (411, 412); and
a mobile station (421, 423) in which a radio channel is set to said base station (411, 412), that transmits a data block to said base station (411, 412) in accordance with transmission resource assignment information from said base station (411, 412), that retransmits said data block upon receiving from said base station (411, 412) said delivery confirmation signal indicating a reception error, that completes transmission of said data block upon receiving said delivery confirmation signal indicating correct reception, and that transmits a transmission process state notification for reporting whether said mobile station (421, 423) is in a retransmission state, which is a state in which said mobile station (421, 423) waits for a retransmission, or a free state, which is a state in which said mobile station (421, 423) does not wait for a retransmission;
wherein said base station (411, 412) transmits said delivery confirmation signal according to whether said data block has been correctly received or not, and said base station (411, 412) determines and transmits said assignment of transmission resources to said mobile station (421, 423) according to the transmission process state in said mobile station (421, 423), and
**characterized by** said mobile station (421, 423), upon having received said transmission resource assignment information said mobile station not having data to be transmitted, transmits a first transmission process state notification, and upon having received said transmission resource assignment information said mobile station having data to be transmitted but said mobile station (421, 423) does not transmit the data, transmits a second transmission process state notification.

13. A base station (411, 412) in which a radio channel is set to a mobile station (421, 423), comprising:
means for receiving from said mobile station (421, 423) a data block and transmission process state notification reporting whether said mobile station (421, 423) is in a retransmission waiting state or not;
means for determining whether said data block has been correctly received or not;
means for determining and transmitting the assignment of transmission resources to said mobile station (421, 423) according to said transmission process state notification; and
means for both reporting transmission resource assignment information to said mobile station (421, 423) and for transmitting delivery confirmation signals indicating whether said data blocks have been correctly received or not,
**characterized by** said mobile station (421, 423), upon having received said transmission resource assignment information said mobile station not having data to be transmitted, transmits a first transmission process state notification, and upon having received said transmission resource assignment information said mobile station having data to be transmitted but said mobile station (421, 423) does not transmit the data, transmits a second transmission process state notification.

14. A mobile station (421, 423) in which a radio channel is set to a base station (411, 412), comprising:
storage means for storing data to be transmitted;
means for receiving from said base station (411, 412) transmission resource assignment information and delivery confirmation signals;
means for transmitting data in said storage means as a data block in accordance with said transmission resource assignment information, retransmitting said data block upon receiving said delivery confirmation signal indicating a reception error, and ending transmission of said data block upon receiving said delivery confirmation signal indicating correct reception; and
means for transmitting a transmission process state notification for reporting whether said mobile station (421, 423) is in a retransmission waiting state or not,
**characterized by** said mobile station (421, 423), upon having received said transmission resource assignment information, said mobile station having no data to be transmitted, transmits a first transmission process state notification, and upon having received said transmission resource assignment information, said mobile station having data to be transmitted but said mobile station does not transmit the data, transmits a second transmission process state notification.

15. A program that can be executed by a computer that forms a base station (411, 412) in which a radio channel is set to a mobile station (421, 423), said program causing said computer to execute processes of:
receiving from said mobile station (421, 423) a data block and transmission process state notification for reporting whether the mobile station (421, 423) is in a retransmission waiting state or not;
determining whether said data block has been received correctly or not; determining and transmitting assignment of transmission resources to said mobile station (421, 423) according to said transmission process state notification; and
both reporting transmission resource assignment information to said mobile station (421, 423) and transmitting delivery confirmation signals indicating whether said data block has been correctly received or not,
**characterized by** said mobile station (421, 423), upon having received said transmission resource assignment information said mobile station not having data to be transmitted, transmits a first transmission process state notification, and upon having received said transmission resource assignment information said mobile station having data to be transmitted but said mobile station (421, 423) does not transmit the data, transmits a second transmission process state notification.

16. A program that can be executed by a computer that forms a mobile station (421, 423) in which a radio channel is set to a base station (411, 412), said program causing said computer to execute processes of:
storing, in a storage unit, data to be transmitted;
receiving from said base station (411, 412) transmission resource assignment information and delivery confirmation signals;
transmitting data in said storage unit as a data block in accordance with said transmission resource assignment information, retransmitting said data block upon receiving said delivery confirmation signal indicating a reception error, and ending transmission of said data block upon receiving said delivery confirmation signal indicating correct reception; and
transmitting a transmission process state notification for reporting whether said mobile station (421, 423) is in a retransmission waiting state or not;
**characterized in** having received said transmission resource assignment information said mobile station not having data to be transmitted, transmitting a first transmission process state notification; and
having received said transmission resource assignment information said mobile station having data to be transmitted but said mobile station (421, 423) does not transmit the data, transmitting a second transmission process state notification.

## Patentansprüche

1. Kommunikationssteuerungsverfahren in einem Funkkommunikationssystem, das eine Basisstation (411, 412) und eine Mobilstation (421, 423), in welcher ein Funkkanal auf die Basisstation (411, 412) eingestellt ist, aufweist; wobei das Kommunikationssteuerungsverfahren die folgenden Schritte umfasst:
die Basisstation (411, 412) teilt der Mobilstation (421, 423) Übertragungsressourcenzuteilungsinformationen mit, welche die Zuordnung von Übertragungsressourcen angeben;
die Mobilstation (421, 423) überträgt einen Datenblock gemäß den Übertragungsressourcenzuteilungsinformationen;
die Basisstation (411, 412) überträgt ein Lieferbestätigungssignal, das angibt, ob der Datenblock korrekt empfangen worden ist oder nicht;
die Mobilstation (421, 423) überträgt den Datenblock erneut bei Empfang des Lieferbestätigungssignals, das einen Empfangsfehler angibt;
die Mobilstation (421, 423) schließt die Übertragung des Datenblocks ab bei Empfang des Lieferbestätigungssignals, das korrekten Empfang angibt;
die Mobilstation (421, 423) überträgt eine Übertragungsvorgangzustandsbenachrichtigung, die berichtet, ob die Mobilstation (421, 423) sich in einem Übertragungswiederholungszustand befindet, der ein Zustand des Wartens auf eine erneute Übertragung ist, oder in einem freien Zustand, der ein Zustand ist, in dem nicht auf eine erneute Übertragung gewartet wird; und
die Basisstation (411, 412) bestimmt und überträgt die Zuordnung der Übertragungsressourcen an die Mobilstation (421, 423) gemäß dem Übertragungsvorgangszustand in der Mobilstation (421, 423),
**dadurch gekennzeichnet, dass** die Mobilstation (421, 423), nach Empfang der Übertragungsressourcenzuteilungsinformationen, wobei die Mobilstation keine zu übertragenden Daten hat, eine erste Übertragungsvorgangszustandbenachrichtigung überträgt und nach Empfang der Übertragungsressourcenzuteilungsinformationen, wobei die Mobilstation zu übertragende Daten hat, aber die Mobilstation (421, 423) die Daten nicht überträgt, eine zweite Übertragungsvorgangszustandsbenachrichtigung überträgt.

2. Kommunikationssteuerungsverfahren gemäß Anspruch 1, wobei die Mobilstation (421, 423) die Übertragungsvorgangszustandsbenachrichtigung zu einer vorgegebenen Zeit überträgt.

3. Kommunikationssteuerungsverfahren gemäß Anspruch 1, wobei die Mobilstation (421, 423) die Übertragungsvorgangszustandsbenachrichtigung gemäß dem Empfang des Lieferbestätigungssignals überträgt.

4. Kommunikationssteuerungsverfahren gemäß einem der Ansprüche 1 bis 3, wobei die Mobilstation (421, 423) die Übertragungsvorgangszustandsbenachrichtigung überträgt, wenn es keine zu übertragenden Daten in einem Puffer der Mobilstation (421, 423) bei ACK Empfangszeit gibt, welche die Zeit des Empfangs des Lieferbestätigungssignals, das korrekten Empfang angibt, ist, und darüber hinaus zu übertragende Daten nicht innerhalb eines vorgegebenen Zeitintervalls von der ACK Empfangszeit aufgetreten sind.

5. Kommunikationssteuerungsverfahren gemäß einem der Ansprüche 1 bis 4, wobei die Mobilstation (421, 423) die Übertragungsvorgangszustandsbenachrichtigungen überträgt, wenn Ressourcen nicht zugeteilt worden sind, die für eine erneute Übertragung gemäß dem Lieferbestätigungssignal notwendig sind, das den Empfangsfehler während eines vorgegebenen Zeitintervalls von der NACK Empfangszeit angibt, welche die Zeit des Empfangs des Lieferbestätigungssignals, das einen Empfangsfehler angibt, ist.

6. Kommunikationssteuerungsverfahren gemäß einem der Ansprüche 1 bis 5, wobei die Mobilstation (421, 423) die Übertragungsvorgangszustandsbenachrichtigung überträgt und dann, bei Empfang des Lieferbestätigungssignals, das korrekten Empfang angibt, zu einer vorgegebenen Zeit, Daten, die übertragen werden, verwirft und erneute Übertragung anhält.

7. Kommunikationssteuerungsverfahren gemäß einem der Ansprüche 1 bis 6, wobei die Mobilstation (421, 423) die Übertragungsvorgangszustandsbenachrichtigung überträgt, wenn es keine zu übertragenden Daten in einem Puffer der Mobilstation (421, 423) zu einer Zuteilungsempfangszeit gibt, welche die Zeit des Empfangs der Übertragungsressourcenzuteilungsinformationen ist, und darüber hinaus keine zu übertragenden Daten innerhalb eines vorgegebenen Zeitintervalls von der SA Empfangszeit auftreten.

8. Kommunikationssteuerungsverfahren gemäß einem der Ansprüche 1 bis 7, wobei, wenn die Basisstation (411, 412) die Übertragungsressourcenzuteilungsinformationen überträgt und dann weder einen Datenblock noch die Übertragungsvorgangszustandsbenachrichtigung von der Mobilstation (421, 423) über ein vorgegebenes Intervall empfängt, die Basisstation (411, 412) die Übertragungsleistung der Übertragungsressourcenzuteilungsinformationen um einen vorgegebenen Wert erhöht und dann überträgt.

9. Kommunikationssteuerungsverfahren gemäß einem der Ansprüche 1 bis 7, wobei die Basisstation (411, 412), bei Empfang der zweiten Übertragungsvorgangszustandsbenachrichtigung, die Priorität der Zuteilung von Übertragungsressourcen an den Datenblock verringert.

10. Kommunikationssteuerungsverfahren gemäß einem der Ansprüche 1 bis 9, wobei die maximale Übertragungsrate und Übertragungszeit, welche die Mobilstation (421, 423) nutzen darf, als die Übertragungsressourcen zugeteilt werden.

11. Kommunikationssteuerungsverfahren gemäß einem der Ansprüche 1 bis 9, wobei die maximale Übertragungsrate, welche die Mobilstation (421, 423) nutzen darf, als die Übertragungsressourcen zugeteilt wird.

12. Funkkommunikationssystem, das folgendes umfasst:
eine Basisstation (411, 412); und
eine Mobilstation (421, 423), bei welcher ein Funkkanal auf die Basisstation (411, 412) eingestellt ist, die einen Datenblock an die Basisstation (411, 412) gemäß Übertragungsressourcenzuteilungsinformationen von der Basisstation (411, 412) überträgt, die den Datenblock bei Empfang von der Basisstation (411, 412) des Lieferbestätigungssignals, das einen Empfangsfehler angibt, erneut überträgt, die Übertragung des Datenblocks bei Empfang des Lieferbestätigungssignals, das korrekten Empfang angibt, abschließt und die eine Übertragungsvorgangszustandsbenachrichtigung überträgt, um zu berichten, ob die Mobilstation (421, 423) sich in einem Zustand der erneuten Übertragung, der ein Zustand ist, in dem die Mobilstation (421, 423) auf eine erneute Übertragung wartet, oder in einem freien Zustand, der ein Zustand ist, in dem die Mobilstation (421, 423) nicht auf eine erneute Übertragung wartet, befindet;
wobei die Basisstation (411, 412) das Lieferbestätigungssignal, gemäß dem der Datenblock korrekt empfangen wurde oder nicht, überträgt und die Basisstation (411, 412) die Zuteilung von Übertragungsressourcen an die Mobilstation (421, 423) gemäß dem Übertragungsvorgangszustand in der Mobilstation (421, 423) bestimmt und überträgt und
**dadurch gekennzeichnet, dass** die Mobilstation (421, 423), nach Empfang der Übertragungsressourcenzuteilungsinformationen, wobei die Mobilstation keine zu übertragenden Daten hat, eine erste Übertragungsvorgangszustandsbenachrichtigung überträgt, und nach Empfang der Übertragungsressourcenzuteilungsinformationen, wobei die Mobilstation zu übertragende Daten hat, aber die Mobilstation (421, 423) die Daten nicht überträgt, eine zweite Übertragungsvorgangszustandsbenachrichtigung überträgt.

13. Basisstation (411, 412), bei der ein Funkkanal auf eine Mobilstation (421, 423) eingestellt ist, und die folgendes umfasst:
Mittel zum Empfangen von der Mobilstation (421, 423) eines Datenblocks und einer Übertragungsvorgangszustandsbenachrichtigung, die berichtet, ob die Mobilstation (421, 423) in einem Wartezustand für erneute Übertragung ist oder nicht;
Mittel zum Bestimmen, ob der Datenblock korrekt empfangen worden ist oder nicht;
Mittel zum Bestimmen und Übertragen der Zuteilung von Übertragungsressourcen an die Mobilstation (421, 423) gemäß der Übertragungsvorgangszustandsbenachrichtigung; und
Mittel sowohl zum Berichten von Übertragungsressourcenzuteilungsinformationen an die Mobilstation (421, 423) als auch Übertragen von Lieferbestätigungssignalen, die angeben, ob die Datenblöcke korrekt empfangen worden sind oder nicht,
**dadurch gekennzeichnet, dass** die Mobilstation (421, 423) nach Empfang der Übertragungsressourcenzuteilungsinformationen, wobei die Mobilstation keine zu übertragenden Daten hat, eine erste Übertragungsvorgangszustandsbenachrichtigung überträgt und nach Empfang der Übertragungsressourcenzuteilungsinformationen, wobei die Mobilstation zu übertragende Daten hat, aber die Mobilstation (421, 423) die Daten nicht überträgt, eine zweite Übertragungsvorgangszustandsbenachrichtigung überträgt.

14. Mobilstation (421, 423), bei der ein Funkkanal auf eine Basisstation (411, 412) eingestellt ist, die folgendes umfasst:
Speichermittel zum Speichern zu übertragender Daten;
Mittel zum Empfangen von der Basisstation (411, 412) von Übertragungsressourcenzuteilungsinformationen und Lieferbestätigungssignalen;
Mittel zum Übertragen von Daten in dem Speichermittel als ein Datenblock gemäß den Übertragungsressourcenzuteilungsinformationen, erneuten Übertragen des Datenblocks bei Empfang des Lieferbestätigungssignals, das einen Empfangsfehler angibt, und Beenden von Übertragung des Datenblocks bei Empfang des Lieferbestätigungssignals, das korrekten Empfang angibt; und
Mittel zum Übertragen einer Übertragungsvorgangszustandsbenachrichtigung zum Berichten, ob die Mobilstation (421, 423) in einem Wartezustand für erneute Übertragung ist oder nicht,
**dadurch gekennzeichnet, dass** die Mobilstation (421, 423), nach Empfang der Übertragungsressourcenzuteilungsinformationen, wobei die Mobilstation keine zu übertragenden Daten hat, eine erste Übertragungsvorgangszustandsbenachrichtigung überträgt und nach Empfang der Übertragungsressourcenzuteilungsinformationen, wobei die Mobilstation zu übertragende Daten hat, aber die Mobilstation die Daten nicht überträgt, eine zweite Übertragungsvorgangszustandsbenachrichtigung überträgt.

15. Programm, das durch einen Computer, der eine Basisstation (411, 412) bildet, in der ein Funkkanal auf eine Mobilstation (421, 423) eingestellt ist, ausgeführt werden kann, wobei das Programm den Computer zum Ausführen der folgenden Verfahren veranlasst:
Empfangen von der Mobilstation (421, 423) eines Datenblocks und Übertragungsvorgangszustandsbenachrichtigung zum Berichten, ob die Mobilstation (421, 423) sich in einem Wartezustand für erneute Übertragung befindet oder nicht;
Bestimmen, ob der Datenblock korrekt empfangen worden ist oder nicht;
Bestimmen und Übertragen von Zuteilung von Übertragungsressourcen an die Mobilstation (421, 423) gemäß der Übertragungsvorgangszustandsbenachrichtigung, und
sowohl Berichten von Übertragungsressourcenzuteilungsinformationen an die Mobilstation (421, 423) als auch Übertragen von Lieferbestätigungssignalen, die angeben, ob der Datenblock korrekt empfangen worden ist oder nicht,
**dadurch gekennzeichnet, dass** die Mobilstation (421, 423) nach Empfang der Übertragungsressourcenzuteilungsinformationen, wobei die Mobilstation keine zu übertragenden Daten hat, eine erste Übertragungsvorgangszustandsbenachrichtigung überträgt und nach Empfang der Übertragungsressourcenzuteilungsinformationen, wobei die Mobilstation zu übertragende Daten hat, aber die Mobilstation (421, 423) die Daten nicht überträgt, eine zweite Übertragungsvorgangszustandsbenachrichtigung überträgt.

16. Programm, das durch einen Computer, der eine Mobilstation (421, 423), bei welcher ein Funkkanal auf eine Basisstation (411, 412) eingestellt ist, bildet, ausgeführt werden kann, wobei das Programm den Computer zum Ausführen der folgenden Verfahren veranlasst:
Speichern, in einer Speichereinheit, von zu übertragenden Daten;
Empfangen von der Basisstation (411, 412) von Übertragungsressourcenzuteilungsinformationen und Lieferbestätigungssignalen;
Übertragen von Daten in der Speichereinheit als einen Datenblock gemäß den Übertragungsressourcenzuteilungsinformationen, erneutes Übertragen des Datenblocks bei Empfang des Lieferbestätigungssignals, das einen Empfangsfehler angibt, und Beenden der Übertragung des Datenblocks bei Empfang des Lieferbestätigungssignal, das korrekten Empfang angibt; und
Übertragen einer Übertragungsvorgangszustandsbenachrichtigung zum Berichten, ob die Mobilstation (421, 423) sich in einem Wartezustand für erneute Übertragung befindet oder nicht;
**dadurch gekennzeichnet, dass**, nach Empfang der Übertragungsressourcenzuteilungsinformationen, wobei die Mobilstation keine zu übertragenden Daten hat, eine erste Übertragungsvorgangszustandsbenachrichtigung übertragen wird; und
nach Empfang der Übertragungsressourcenzuteilungsinformationen, wobei die Mobilstation zu übertragende Daten hat, aber die Mobilstation (421, 423) die Daten nicht überträgt, eine zweite Übertragungsvorgangszustandsbenachrichtigung übertragen wird.

## Revendications

1. Procédé de contrôle des communications dans un système de communication radio comportant une station de base (411, 412) et une station mobile (421, 423) dans laquelle un canal radio est réglé sur ladite station de base (411, 412) ; ledit procédé de contrôle des communications comprenant les étapes de :
notification par ladite station de base (411, 412) à ladite station mobile (421, 423) d'informations d'attribution de ressource de transmission indiquant l'attribution de ressources de transmission ;
transmission par ladite station mobile (421, 423) d'un bloc de données en conformité avec lesdites informations d'attribution de ressource de transmission ;
transmission par ladite station de base (411, 412) d'un signal de confirmation de remise indiquant si ledit bloc de données a été correctement reçu ou non ;
retransmission par ladite station mobile (421, 423) dudit bloc de données lors de la réception dudit signal de confirmation de remise indiquant une erreur de réception ;
achèvement par ladite station mobile (421, 423) de la transmission dudit bloc de données lors de la réception dudit signal de confirmation de remise indiquant une réception correcte ;
transmission par ladite station mobile (421, 423) d'une notification d'état de processus de transmission signalant si ladite station mobile (421, 423) est dans un état de retransmission, qui est un état d'attente d'une retransmission, ou un état libre, qui est un état de non-attente d'une retransmission ; et de
détermination et de transmission par ladite station de base (411, 412) de l'attribution desdites ressources de transmission à ladite station mobile (421, 423) en conformité avec l'état de processus de transmission dans ladite station mobile (421, 423),
**caractérisé par** la transmission par ladite station mobile (421, 423), lors de la réception desdites informations d'attribution de ressource de transmission, ladite station mobile n'ayant pas de données à transmettre, d'une première notification d'état de processus de transmission, et lors de la réception desdites informations d'attribution de ressource de transmission, ladite station mobile ayant des données à transmettre mais ladite station mobile (421, 423) ne transmettant pas les données, d'une seconde notification d'état de processus de transmission.

2. Procédé de contrôle des communications selon la revendication 1, dans lequel ladite station mobile (421, 423) transmet ladite notification d'état de processus de transmission à une période prescrite.

3. Procédé de contrôle des communications selon la revendication 1, dans lequel ladite station mobile (421, 423) transmet ladite notification d'état de processus de transmission selon la réception dudit signal de confirmation de remise.

4. Procédé de contrôle des communications selon l'une quelconque des revendications 1 à 3, dans lequel ladite station mobile (421, 423) transmet ladite notification d'état de processus de transmission lorsqu'il n'y a pas de données à transmettre dans une mémoire tampon de ladite station mobile (421, 423) à l'heure de réception de l'accusé de réception, qui est l'heure de réception dudit signal de confirmation de remise indiquant une réception correcte, et de plus, les données à transmettre n'ont pas eu lieu dans un intervalle prescrit à partir de ladite heure de réception d'accusé de réception.

5. Procédé de contrôle des communications selon l'une quelconque des revendications 1 à 4, dans lequel ladite station mobile (421, 423) transmet lesdites notifications d'état de processus de transmission lorsque les ressources n'ont pas été attribuées qui sont nécessaires pour une retransmission correspondant audit signal de confirmation de remise indiquant ladite erreur de réception pendant un intervalle prescrit à partir de ladite heure de réception d'accusé de réception négatif, qui est l'heure de réception dudit signal de confirmation de remise indiquant une erreur de réception.

6. Procédé de contrôle des communications selon l'une quelconque des revendications 1 à 5, dans lequel ladite station mobile (421, 423) transmet ladite notification d'état de processus de transmission puis, lors de la réception dudit signal de confirmation de remise indiquant une réception correcte à un moment prescrit, supprime les données qui sont en cours de transmission et interrompt la retransmission.

7. Procédé de contrôle des communications selon l'une quelconque des revendications 1 à 6, dans lequel ladite station mobile (421, 423) transmet ladite notification d'état de processus de transmission lorsqu'il n'y a pas de données à transmettre dans une mémoire de ladite station mobile (421, 423) à une heure de réception d'attribution, qui est l'heure de réception desdites informations d'attribution de ressource de transmission, et de plus, aucune donnée à transmettre n'a lieu dans un intervalle prescrit à partir de l'heure de réception de SA.

8. Procédé de contrôle des communications selon l'une quelconque des revendications 1 à 7, dans lequel lorsque ladite station de base (411, 412) transmet lesdites informations d'attribution de ressource de transmission, puis ne reçoit ni un bloc de données ni ladite notification d'état de processus de transmission de ladite station mobile (421, 423) au cours d'un intervalle prescrit, ladite station de base (411, 412) augmente la puissance de transmission desdites informations d'attribution de ressource de transmission d'une valeur prescrite puis transmet.

9. Procédé de contrôle des communications selon l'une quelconque des revendications 1 à 7, dans lequel ladite station de base (411, 412), lors de la réception de ladite seconde notification d'état de processus de transmission, abaisse la priorité d'attribution des ressources de transmission audit bloc de données.

10. Procédé de contrôle des communications selon l'une quelconque des revendications 1 à 9, dans lequel la vitesse de transmission maximale et le temps de transmission maximal que ladite station mobile (421, 423) est autorisée à utiliser sont attribués en tant que lesdites ressources de transmission.

11. Procédé de contrôle des communications selon l'une quelconque des revendications 1 à 9, dans lequel ladite vitesse de transmission maximale que ladite station mobile (421, 423) est autorisée à utiliser est attribuée en tant que lesdites ressources de transmission.

12. Système de communication radio comprenant :
une station de base (411, 412) ; et
une station mobile (421, 423) dans laquelle un canal radio est réglé sur ladite station de base (411, 412), qui transmet un bloc de données à ladite station de base (411, 412) en conformité avec les informations d'attribution de ressource de transmission provenant de ladite station de base (411, 412) qui retransmet ledit bloc de données lors de la réception en provenance de ladite station de base (411, 412) dudit signal de confirmation de remise indiquant une erreur de réception, qui achève la transmission dudit bloc de données lors de la réception dudit signal de confirmation de remise indiquant une réception correcte, et qui transmet une notification d'état de processus de transmission pour signaler si ladite station mobile (421, 423) est dans un état de retransmission, qui est un état dans lequel ladite station mobile (421, 423) attend une retransmission, ou un état libre, qui est un état dans lequel ladite station mobile (421, 423) n'attend pas une retransmission ;
dans lequel ladite station de base (411, 412) transmet ledit signal de confirmation de remise selon que ledit bloc de données a été correctement reçu ou non, et ladite station de base (411, 412) détermine et transmet ladite attribution de ressources de transmission à ladite station mobile (421, 423) selon l'état de processus de transmission dans ladite station mobile (421, 423), et
**caractérisé par** la transmission par ladite station mobile (421, 423), lors de la réception desdites informations d'attribution de ressource de transmission, ladite station mobile n'ayant pas de données à transmettre, d'une première notification d'état de processus de transmission, et lors de la réception desdites informations d'attribution de ressource de transmission, ladite station mobile ayant des données à transmettre mais ladite station mobile (421, 423) ne transmettant pas les données, d'une seconde notification d'état de processus de transmission.

13. Station de base (411, 412) dans laquelle un canal radio est réglé sur une station mobile (421, 423), comprenant :
un moyen pour recevoir en provenance de ladite station mobile (421, 423) un bloc de données et une notification d'état de processus de transmission signalant si ladite station mobile (421, 423) est dans un état d'attente de retransmission ou non ;
un moyen pour déterminer si ledit bloc de données a été correctement reçu ou non ;
un moyen pour déterminer et transmettre l'attribution des ressources de transmission à ladite station mobile (421, 423) selon ladite notification d'état de processus de transmission ; et
un moyen pour à la fois indiquer les informations d'attribution de ressource de transmission à ladite station mobile (421, 423) et pour transmettre des signaux de confirmation de remise indiquant si lesdits blocs de données ont été correctement reçus ou non,
**caractérisée par** la transmission par ladite station mobile (421, 423), lors de la réception desdites informations d'attribution de ressource de transmission, ladite station mobile n'ayant pas de données à transmettre, d'une première notification d'état de processus de transmission, et lors de la réception desdites informations d'attribution de ressource de transmission, ladite station mobile ayant des données à transmettre mais ladite station mobile (421, 423) ne transmettant pas les données, d'une seconde notification d'état de processus de transmission.

14. Station mobile (421, 423) dans laquelle un canal radio est réglé sur une station de base (411, 412), comprenant :
un moyen de stockage pour stocker des données à transmettre ;
un moyen de réception en provenance de ladite station de base (411, 412) d'informations d'attribution de ressource de transmission et de signaux de confirmation de remise ;
un moyen de transmission de données dans ledit moyen de stockage en tant que bloc de données en conformité avec lesdites informations d'attribution de ressource de transmission, de retransmission du bloc de données lors de la réception dudit signal de confirmation de remise indiquant une erreur de réception, et d'arrêt de transmission dudit bloc de données lors de la réception dudit signal de confirmation de remise indiquant une réception correcte ; et
un moyen de transmission d'une notification d'état de processus de transmission pour indiquer si ladite station mobile (421, 423) est dans un état d'attente de retransmission ou non,
**caractérisée par** la transmission par ladite station mobile (421, 423), lors de la réception desdites informations d'attribution de ressource de transmission, ladite station mobile n'ayant pas de données à transmettre, d'une première notification d'état de processus de transmission, et lors de la réception desdites informations d'attribution de ressource de transmission, ladite station mobile ayant des données à transmettre mais ladite station mobile ne transmettant pas les données, d'une seconde notification d'état de processus de transmission.

15. Programme qui peut être exécuté par un ordinateur qui forme une station de base (411, 412) dans laquelle un canal radio est réglé sur une station mobile (421, 423), ledit programme amenant ledit ordinateur à exécuter les procédés de :
réception en provenance de ladite station mobile (421, 423) d'un bloc de données et d'une notification d'état de processus de transmission pour indiquer si la station mobile (421, 423) est dans un état d'attente de retransmission ou non ;
détermination consistant à savoir si ledit bloc de données a été reçu correctement ou non ;
détermination et transmission de l'attribution de ressources de transmission à ladite station mobile (421, 423) selon ladite notification d'état de processus de transmission ; et
à la fois indication des informations d'attribution de ressource de transmission à ladite station mobile (421, 423) et transmission des signaux de confirmation de remise indiquant si ledit bloc de données a été correctement reçu ou non,
**caractérisé par** la transmission par ladite station mobile (421, 423), lors de la réception desdites informations d'attribution de ressource de transmission, ladite station mobile n'ayant pas de données à transmettre, d'une première notification d'état de processus de transmission, et lors de la réception desdites informations d'attribution de ressource de transmission, ladite station mobile ayant des données à transmettre mais ladite station mobile (421, 423) ne transmettant pas les données, d'une seconde notification d'état de processus de transmission.

16. Programme qui peut être exécuté par un ordinateur qui forme une station mobile (421, 423) dans laquelle un canal radio est réglé sur une station de base (411, 412), ledit programme amenant ledit ordinateur à exécuter les procédés de :
stockage, dans une unité de stockage, des données à transmettre ;
réception en provenance de ladite station de base (411, 412) des informations d'attribution de ressource de transmission et des signaux de confirmation de remise ;
transmission de données dans ladite unité de stockage en tant que bloc de données en conformité avec lesdites informations d'attribution de ressource de transmission, retransmission dudit bloc de données lors de la réception dudit signal de confirmation de remise indiquant une erreur de réception, et arrêt de la transmission dudit bloc de données lors de la réception dudit signal de confirmation de remise indiquant une réception correcte ; et
transmission d'une notification d'état de processus de transmission pour indiquer si ladite station mobile (421, 423) est dans un état d'attente de retransmission ou non ;
**caractérisé par**, lors de la réception desdites informations d'attribution de ressource de transmission, ladite station mobile n'ayant pas de données à transmettre, la transmission d'une première notification d'état de processus de transmission ; et
lors de la réception desdites informations d'attribution de ressource de transmission, ladite station mobile ayant des données à transmettre mais ladite station mobile (421, 423) ne transmettant pas les données, d'une seconde notification d'état de processus de transmission.
